# EUROPEAN PATENT SPECIFICATION

(11) **EP 4 349 701 B1**
(45) Date of publication and mention of the grant of the patent: **09.12.2026**
(21) Application number: 22199912.1
(22) Date of filing: 05.10.2022
(51) Int. Cl.: B62K 19/16, B62J 43/28, B62M 6/65, B62M 6/90, B62K 19/36, B62J 1/08, B62K 21/02, B62K 19/38

(54) **A BICYCLE FRAME FOR AN ELECTRIC BICYCLE, A SEATPOST AND A METHOD OF MANUFACTURING A BICYCLE FRAME**
FAHRRADRAHMEN FÜR EIN ELEKTROFAHRRAD, SATTELSTÜTZE UND VERFAHREN ZUR HERSTELLUNG EINES FAHRRADRAHMENS
CADRE DE BICYCLETTE POUR BICYCLETTE ÉLECTRIQUE, TIGE DE SELLE ET PROCÉDÉ DE FABRICATION D'UN CADRE DE BICYCLETTE

(43) Date of publication of application: 10.04.2024
(73) Proprietor: CIP Mobility GmbH, 82031 Grünwald (DE)
(72) Inventor: OPEL, Simon, 90587 Obermichelbach (DE)
(74) Representative: Murgitroyd & Company

(56) References cited:
- EP-A1- 2 982 591
- WO-A1-2022/122194
- CN-U- 206 417 111
- DE-B3- 102019 002 633
- KR-A- 20120 111 687
- US-A1- 2012 098 232
- US-A1- 2014 191 492
- SUTTON MARK: "Injection molded and integrated e-Bike cuts assembly times and cost", CYCLING INDUSTRY NEWS, 25 October 2019 (2019-10-25), XP093026479, Retrieved from the Internet <URL:https://cyclingindustry.news/injection-molded-and-integrated-e-bike-cuts-assembly-times-and-cost/> [retrieved on 20230223]

## Description

### Technical Field

The present disclosure relates to the field of electric bicycles and more particularly to components of an electric bicycle as a bicycle frame made of a unitary structure manufactured by injection moulding of reinforced thermoplastic material. Further a saddle post, an electrical bicycle and a method producing components of the electric bicycle as a bicycle frame are provided. The frame comprises a head tube, a seat tube, a middle portion and a rear portion, wherein the seat tube is configured to receive the saddle post.

### Background

In view of the growing population in cities there is the need to optimize mobility and logistic systems within urban areas. From an environmental perspective there is further the need to reduce carbon dioxide production and to develop transport solutions toward sustainability. This object can be addressed by electric vehicles, which do not produce any exhaust gases and may be an alternative to cars with combustion engines. In view of the growing demand for space in the cities and connecting roads the development of compact electric vehicles such as bicycles which are based on propulsion systems using pedals are preferable. Thus, it is an object of the present invention to provide electric bicycles having the advantage to be eco-friendly, quiet and reliable vehicles for transport.

WO2022/122194 A1 refers to a process for producing a two-wheeler frame. Cycling Industry News of 25 October 2019 discloses "Injection molded and integrated e-Bike cuts assembly times and cost" by Sutton Mark. CN 206 417 111 U refers to a height adjusting device for a seat. DE 10 2019 002633 B3 relates to another adjusting device for a seat or handlebar. KR 2012/0111687 refers to a bike using injection-molding frame. EP 2982591 A1 refers to a E-Bike with composite chassis made of two half shells.

An electric bicycle can be driven by pedalling using muscle power with or without assistance. In the context of the following disclosure an electric bicycle comprises a so called Pedelec (pedal electric cycle), E-Bike, S-Pedelec, S-Bike or Electrovelo and each of the latter may be configured to be used as cargo bike. That is to say the term electric bicycle as used throughout the following description encompasses the provision of pedalling assistance, wherein an electric motor may be manually or automatically switched on, preferably when the pedals are operated.

The use of the electric motor might be limited such that the motor assists only for as long as the vehicle has not exceeded a speed of 25 km/h, if the electric bicycle is used as pedelec, which are classified in Germany as bicycle. For said pedelecs the EU guidelines limit the average power of the motor to 250 W. E-Bikes or pedelecs with speed limitation permit locomotion without having to make a large effort. Further there are S-bike or S- pedelecs known that have higher motor power and assistance up to 45 km/h.

The present invention relates to electric bicycles and in particular, its main parts as frame and saddle post and the manufacture thereof. Frames, in particular, play a crucial role in constructing a bicycle that is of high quality and durability. Serving as the backbone and upholding the entire structure of the bicycle, it is important that the material used for the frame is capable to withstand large forces applied to the bicycle. At the same time the frame should be as light-weight as possible. An electric bicycle differs from a customary bicycle in having additional loads such an additional electric motor and a battery or an accumulator. Usually the latter is either attached externally to the bicycle frame or may be inserted into a metal frame having two halves. Further, if the electric bike is configured to transport loads even more rigidity and stability is needed.

The frame is the most important part of the bicycle. Typically, the structure of a bicycle frame consists of two triangles forming a diamond frame consisting of a main triangle and a paired rear triangle. This diamond structure are typically made of a multiplicity of individual tubular sections involving complex joining techniques such as welding or other joining methods. Among bicycle frames a conventional material is for example steel or light alloys as titanium or aluminium alloys having high strength. However, frames made of metals such an aluminium alloy usually involve welding and there is a problem of fatigue of the welded portions and that stress corrosion cracking, especially under severe use conditions such as cargo bikes.

As preferable characteristics for a frame the following can be mentioned:
- High impact resistance and high fatigue strength;
- Frame being platform for entire electric bike e.g. by provision of receiving portions for back wheel, saddle post, fork etc. and for electric components;
- Excellent uniformity although complicate shapes are required (e.g. receiving portions or holes and changes of wall thickness; non-uniform or defective portions cannot be used since the frame is one of the most important components of a bicycle);
- Providing stable seat tube for receiving and interconnecting a saddle post to keep the operator safely positioned on the electric bicycle; and
- Possibility of mass production.

Accordingly, there is the need to provide an affordable technical solution for the main components of an electric bicycle, in particular of a frame and/or a saddle post, which may be manufactured cost efficiently and at high numbers of pieces as e.g. above 200 despite the complexity of the respective components. At the same time each component should meet the technical object to be sufficient rigid and stable for the use as an electric bicycle. Preferably, the frame for the electric bike offers the user flexibility regarding the use of the frame such as a configuration as a cargo bike. Thus a frame should be designed sufficiently strong and permanent or non permanent parts might be provided to allow cargos to be carried.

An object of the present invention is to address the foregoing objective technical problems in the prior art and provide an electrical bicycle and in particular a frame excellent in mechanical properties and at the same time provide a light weight product. Another object of the present invention is to provide a saddle post that can be inserted into the frame.

A further object, is to address the problem of high loads where the force is introduced into the material of the frame and provide a secure and stable connection between the frame and another component such as a battery or accumulator. Accordingly, the object is a frame that is especially suited to receive a wheel, wherein the motor may be positioned in the hub of the wheel.

Finally, besides providing an improvement of electric bicycles by reducing the number of components needed for a frame, the latter should be as much as possible reduced weight. While a complex structure for reinforcing needs to be provided, the possibility of mass production of the wheel should be ensured. These characteristics are advantageous for cost reduction as well as for the production of electric fleet bikes. The frame and other components of the electric bicycle should further be long-lived and easy to maintain.

One further object is to enclose all of the electric operating parts as far as possible so that they are protected both from weather and potential injury, and provide a modern platform for connectivity.

Another object is to provide a saddle post that is not made substantially of metal but of another material and may be safely interlocked when received by a seat tube of a frame made substantially of thermoplastic material. Furthermore, said frame should also be configured to receive a fork.

### Summary of the invention

Aspects of the present invention are directed to a bicycle frame, a seat post and a method

The above objects are solved by a bicycle frame according to the independent claim 1, a seat post, an electrical bicycle and a method for manufacturing said bicycle frame as set out in the appended claims. Various features and advantages of the invention will be apparent from the dependent claims and are set forth in part in the following description and figures, respectively.

According to a first aspect of the present invention a bicycle frame for an electric bicycle is formed by a unitary structure that is to say the frame is provided in a single piece. Said frame is manufactured by injection moulding of reinforced thermoplastic material, wherein the unitary structure comprises a head tube, a seat tube, a middle portion and a rear portion, wherein the middle portion connects the head tube and the seat tube and the rear portion is configured to engage a rear wheel. Additionally, a bottom bracket is formed in the middle portion.

Further the frame is characterized in that an elongated cavity is formed in one of the middle portion or the rear portion and is configured to accommodate at least one energy store for motive power and/or electric equipment. A preferred energy store comprises at least one battery.

According to a preferred embodiment the seat tube has a seat post receptable configured to receive a seat post.

A unitary or integrally manufactured structure avoids joining techniques which might induce unwanted stress concentrations at the joints. Problems as deterioration, deformation or problems of fatigue induced by e.g. welding, soldering or riveting joint fittings on tubes of a conventional bicycle frame made of several tubes of steel or other metals may be overcome by using a single piece of light weight thermoplastic. By using reinforced plastic material the number of components can be reduced to a single piece and numerous steps for assembly can be avoided.

The production of the frame by injection moulding is enabled by providing a large moulding tool, which can manufacture the entire frame comprising the head tube and seat tube as well as middle and rear portions in a single operation step. It is noted that on the one hand the production of such large moulding tools is more complex and time consuming than the development of small-sized moulding tools. On the other hand once the large the moulding tool is developed it enables the production of a high number of frames thus reducing the total production costs. Thus there is the benefit to create automated, high-volume production.

Given the requirement for frames to be strong, stiff, and light, advantages of thermoplastic is its high impact resistance due to the flexible nature of the long polymer chains and at the same time being light weight. Compared to unreinforced thermoplastic the reinforced modification of this material is especially suited for use in a frame exposed to high static loads occurring e.g. when the frame is used as a cargo bike. A further advantage of the material is that in contrast to a duroplast the structure of the thermoplastic material allows the melting and solidification process to be reversed, which allows the frame to be recycled if need and thus providing a sustainable bicycle component.

According to a preferred embodiment of the bicycle frame, a cavity is arranged in the middle portion between the bottom bracket and the head tube and the energy store comprises at least a battery, wherein the cavity is configured such that an outermost circumference of the battery around a longitudinal centre axis of the battery is entirely surrounded by the middle portion.

Thus a multi cavity frame comprising tubes or half open cavities for one or more energy stores is provided and manufactured with a corresponding complex injection moulding tool and related techniques using sliders. The cavity to accommodate the energy store is preferably available from the upper part of the middle portion and at least one electric conductor and/or at least one control line are arranged at the bottom of the cavity. In this way, the insertion of the battery can be assisted by its gravity force and at least one electric connector at the bottom can be easily electrically connected to the the battery. In this way the energy store of the electric bicycle is also quickly ready for use and is further easily exchangeable for recharging.

According to a preferred embodiment of the bicycle frame, a plurality of reinforcing ribs are provided at least on one of the middle portion and the rear portion, said rear portion further configured to support a luggage rack.

Compared to a monolithic frame without subdivisions, the use of a plurality of reinforcing ribs is an excellent way to reduce weight without sacrificing rigidity. Reducing weight significantly contributes to the performance of the electric vehicle and may provide a path toward reducing the vehicle's carbon footprint. The ribs have preferably a uniform wall thickness, what is desirable both mechanically and aesthetically.

The ribs e.g. of the middle portion extend preferably parallel and/or substantially vertical to the longitudinal axis of the middle portion between the head tube and the bottom bracket portion at least in regions of the middle portion. For instance, part or all the outer surface of the cavity for the energy store may not have ribs. In this way the stiffening ribs form substantially square shaped apertures.

In regions of higher mechanical loads such as region above the bottom bracket alternatively the distance between the ribs can be reduced for better strength and/or generally triangular shaped apertures can be provided. In the rear portion the ribs may also extend radially outwardly from the center of the rear wheel hub and/or spaced circumferentially about the center of the rear wheel hub. It should be appreciated that the ribs may be formed in other suitable patterns as long as they improve the mechanical load capability and provide at the same time dimensional stability and weight reduction.

According to a preferred embodiment the material for the bicycle frame is thermoplastic material, which comprises at least one reinforcing component selected from the group of carbon fibres, glass fibres, natural fibres, carbon nano tubes; or a combination thereof, wherein optionally the frame comprises regions with a higher fibre to thermoplastic material weight ratio in order to support higher mechanical loads.

Using a combination of thermoplastic material and reinforcing components provides a good balance of high stiffness, high toughness and low weight. Thus this material is suited for the use in bicycle frames which require to withstand high forces and loads. The high impact resistance nature of the thermoplastic with one or more reinforcing components allows the bicycle to be highly durable especially when used for a cargo bike.

According to a preferred embodiment of the bicycle frame, the reinforced thermoplastic has a glass-fibre content of 20 to 65 % by weight; preferably of 50 % by weight, more preferably 30 % by weight and wherein said thermoplastic is selected from polyamide 6 (PA6), polyamide 6.,6 (PA6.6) or a mixture thereof and at least in regions of higher mechanical loads.

That is to say a preferred polymeric material to be used as carrier resin is a polyamide, which polyamide is typically present in an amount of from about 35 to about 80 % by weight. That is to say a weight ratio of the polyamide to glass-fibre in the polymeric material is in the range of from about 80:20 to about 35:65. More typically the amount of the polyamide ranges from about 45 to about 70 % by weight, preferably 50% by weight and even more typically from about 70 % by weight based on a total weight of the polymeric matrix including both polyamide and reinforcing components.

The bicycle frame made of thermoplastic material and as reinforcing components glass fibres of at least 30 % by weight with regard of the total weight of the polymeric matrix meets the requirements for stability and security according to recognized standards in Germany and Europe as laid out in the standard norms EN 15194 (European Standard "Cycles -electrically powered assisted cycles-EPAC Bicycles, published November 2018) and DIN 79010 (Title: "Cycles-Transportation bikes and cargo bikes-Requirements and test methods for single- and multi-track cycles" ; published February 2020). Further the bicycle frame according to the present invention meets the standards of the International Organisation of Standardisation (ISO) such as ISO 4210 which is in accordance with respective national standards as in Germany DIN EN 4210 or in Switzerland SN EN 4210. For instance dynamic tests according to DIN 79010:2020-02-5.9 or tests according to DIN EN 15194:2018-11- 4.3.7.2 are met by the bicycle frame of the present invention.

In yet another embodiment, the thermoplastic material may comprise not only a reinforcing component but also a colorant component. The colorant component can be a dye, a combination of pigments, a combination of dyes, a combination of at least one pigment and one or more dyes. The choice of colorants depends on the ultimate color desired by the designer for the thermoplastic frame, who may use colors for to improve visibility and thus security in traffic. It should be appreciated that other suitable impact modifiers such as UV-stabilizers known in the art may be used.

It is noted that with regard to UV resistance the bicycle frame made of reinforced thermoplastic material without the addition of UV-stabilizers already fulfils requirements according tests of the standard DIN 75220 D-OUT-T simulating prolonged sun radiation exposure of 240 h and a radiation of 1000+/- W/m².

According to a preferred embodiment, at least one metal insert and/or at least one plastic insert of more rigid plastic than the thermoplastic material of the bicycle frame is connected to the thermoplastic material of the bicycle frame by injection moulding, wherein the metal insert or plastic insert is preferably arranged in or in the vicinity of one or more of the following components:
the head tube the seat tube the bottom bracket, a bearing of rear wheel, a brake caliper and a luggage rack.

Preferably e.g. a luggage rack can be mounted and dismounted as needed using metal and/or plastic inserts in the rear portion of the frame. In this way support for mounting a luggage rack or other components such as a mudguard or other protective plate, a driver or passenger backrest can be provided while maintaining the integrity of the frame and the overall appearance.

According to another preferred embodiment, a plastic insert for a support element of the rear wheel axle comprises apertures for an injection moulded and form-fitting connection. The latter form-fitting connection is especially suited to receive e.g. braking elements. Thus, one preferred embodiment of an injection moulded and form-fitting connection is configured to receive braking elements or other components that are subject to very strong loads when in operation. Using such form-fitting connections increases the stability and security of the respective connection.

In a preferred embodiment of the bicycle frame which is configured for 24 inch wheels the bicycle frame has a weight without inserts of below 10 kg, preferably below 8,5 kg and even more preferably in the range between about 5 kg to 6 kg. The frame can also be configured for other dimensions of wheels in the range of 16 inches to 29 inches. It is noted that the dimensions of the bicycle frame as the height H2 of the frame, which can be defined height between the center of the bottom bracket and the highest center point of the seat post, need to be decreased if the wheel size is decreased. For frames configured for wheels of equal and smaller than 24 inches, as for example 20 inches or 18 inches, minimum weights of the frame of 2 kg can be provided.

According to the present invention, the bicycle frame further comprises a pin assembly at the seat tube having at least one movable pin, which is configured to engage in a corresponding recess of the seat post. This pin assembly is configured for locking the seat post with relation to the seat tube at a predetermined height. In this way a predetermined height of the saddle can be selected.

Such locking pin assembly is a quick release locking assembly and provides means for locating the seat post at a desired height in relation to the seat tube and then securely interlocking. The at least one movable pin allows for easy and reliable aligned interengagement of the seat post with the seat tube. In this way the saddle height can be easily adapted to the need of different users.

According to a preferred embodiment, the rear portion of the bicycle frame comprises a rear wheel hub support and at least one of a luggage rack.

According to the present invention, the rear portion of the bicycle frame comprises recess for accommodating a pivotable locking lever configured to move the at least one pin of the pin assembly through a corresponding opening of the seat tube.

According to the present inventon, the pin assembly is a quick release locking assembly and comprises a cam plate and a pin assembly and is made of reinforced thermoplastic; wherein the lever is movable from a release position to a locked position and is configured to be coupled, via a cam plate, to the pivotable pin assembly comprising the at least one pin, the cam plate defining an elongated guide rail or aperture, wherein a picker of the pin assembly is moveably coupled to the cam plate to move within and constrained by the guide rail or aperture from a release position to a locked position. Said pin assembly is preferably spring biased by a spring element toward the locked position to securely fasten the quick release locking assembly in the locked position.

According to a preferred embodiment, the seat tube has at least partially a non-circular inner cross-section such that the rotation of the corresponding seat post around the seat post axis is limited or prevented.

According to a preferred embodiment, the axially displaceable seat post is guided in a slide insert positioned at an upper portion of the seat tube between the inner diameter of the seat tube and the outer diameter of the seat post. All adjacent components as seat tube, slide insert and seat post are made of thermoplastic material.

Using the slide insert the alignment and sliding movement of the seat post in the seat tube is improved because play between the adjacent components can be reduced. Further, the slide inserts ensures a better accuracy when the operator wants to position the seat post in a predetermined height. Further, the slide insert results in a better stability of the seat post. The quick release locking assembly makes it possible to quickly and specifically adjust the seat post and the saddle to the preferred seat height of the cyclist for which the bicycle is intended.

According to a preferred embodiment, the head tube further comprises at least one bearing bush and is configured to receive the corresponding steer tube of a front wheel fork made of metal and/or thermoplastic material.

The at least one bearing bush is dimensioned such that the front fork assembly is easily journaled in the head tube with minimum play.

According to a preferred embodiment, the electric equipment of the electric bicycle comprises at least one of the following:
cables guided at least partially within the bicycle frame; electric drive unit comprising an electric motor, optionally a chainless drive system; a energy store management system; a break control system; a central control unit, at least one processor; at least one memory, optionally containing one or more applets; at least one user interface, a communication interface for diagnostic tool and/or internet; and a plurality of lights;
an automatic lock; a plurality of indicators.

By means of the electric equipment application or applets such as Internet-of - Things applications can be deployed. The latter loT applications are highly customizable and can be for instance predictive for maintenance. Such applications can be operated by means of a user interface such as a human machine interface (HMI). An advantage of the use of at least one control unit, one or more processors and sensors optionally in combination with memory and/or applets is the control and monitoring of components of the electric bicycle such as the electric motor, drive system or other electric components as energy store, lights, automatic lock and indicators etc. The user interface or communication interface can display e.g. results of a diagnostic tool.

According to another aspect of the present invention a seat post is provided, which is manufactured by injection moulding of reinforced thermoplastic material configured to be received by a seat tube of a bicycle frame formed by a unitary structure and manufactured by injection moulding of reinforced thermoplastic material. Said seat post comprising a hollow profile with a plurality of protruding ribs in order to interengage with at least one pin of the locking assembly arranged at the seat tube.

The seat post is designed to be light weight and is designed to weigh below 0,5 kg and preferably below or equal 470 g. Seat post with common lengths up to maximum 400 mm weigh in the range from 0,25 to 0,5 kg. The seat post according to the present invention complies with tests with regard to security and stability according to the standard norms DIN EN 15194 and DIN 79010. For instance tests according to DIN 79010:2020-02-5.17 or such as test according to DIN EN 15194:2018-11-4.3.15.3.

In the context of this invention the seat post and at least one sub-system of the bicycle frame form interrelated entities, because the seat tube of the bicycle frame and the seat post either directly or indirectly via a slide insert complement each other and might be interlocked by means of the locking assembly, which is preferably a quick release locking assembly using a spring element to bias the locking assembly towards the locked position.

According to a preferred embodiment, the seat post comprises a hollow profile having a U-shaped cross-section that comprises transverse ribs partitioning said hollow profile into a plurality of segments; and wherein the protruding ribs being configured to interengage with a at least one pin or a plurality of pins of the locking assembly and said ribs are arranged transversely to the longitudinal axis of the seat post and may be arranged on the outward facing side of the free ends of the hollow profile.

According to a preferred embodiment, the seat post further is guidable within a slide insert fixated at an upper portion of the seat tube via interengaging elements and the seat post further comprises a flange at the free end of the seat post to prevent a full extraction from the seat post that is configured to abut with the bottom edge of the slide insert.

According to another aspect of the present invention a method of manufacturing a bicycle frame having a unitary structure is provided; the method comprising the following steps: injection moulding of reinforced thermoplastic material to integrally form a unitary structure comprising:a head tube, a seat tube, a middle portion, and a rear portion; wherein a bottom bracket is formed in the middle portion using a single injection tool; and providing and extracting a plurality of slider in the injection tool in the head tube, in the seat tube, in the middle portion and the rear portion to form the head tube, the seat tube and an elongated cavity configured to accommodate a battery, wherein the rear portion comprises a recess for accommodating at least a part of a pin assembly and a lever configured to move at least one pin of the pin assembly through a corresponding opening of the seat tube.

With the use of sliders preferable with a collapsing core mass production of off-tool bicycle frames with an excellent accuracy can be produced. In this manner a manufacturing method is provided wherein an off-tool bicycle frame can be provided. That is to say the product can be produced without additional finishing steps such as grinding or spraying. The manufacturing process is fully automated and cost efficient. Colored, specifically UV-resistant, especially stiffened regions or otherwise improved regions of the bicycle frames can be produced by adding the respective component such as colorant and/or reinforcing component into the thermoplastic material prior to the injection moulding process.

According to a preferred embodiment the method further comprises connecting one or more inserts of metal or plastic into regions of higher mechanical loads by injection moulding and optionally backmoulding through apertures at least a part of one or more insert for connecting in a force- and/or form-fitting manner.

Thus, the additional components are provided in the single mould for the bicycle frame and together with the use of sliders and preferably automated collapsing cores mass production of off-tool bicycle frames with an excellent accuracy can be produced. By integrating inserts further functions can be integrated and e.g. the mechanical stability can be improved in regions where force is introduced.

Moreover other components of the electric bicycle as the seat post, the slide insert as well as the fork are made by injection moulding. Further the wheels are also manufactured as integrally injection moulded components.

According to another aspect an electric bicycle is provided having a bicycle frame according to the first aspect of the present invention, further comprising rear wheel and a fork connected to a front wheel and a steering portion, wherein the fork is a one piece made of reinforced thermoplastic material or the fork comprises metal and thermoplastic material, wherein the fork head is made of metal.

An electric bicycle includes an electric assist bicycle that assists propulsion of the vehicle with an electric motor. It is noted that the electric bicycle according to the invention meets security and stability requirements according to the standard norms EN 15194 and DIN 79010. For example after connection of the electric motor and other electric components the EMV (electro magnetic compatibility also called EMC) examination showed that the electric bicycle is in accordance with EN 15194 4.2.15.1. and 4.2.15. Further tests for a potential connection with a trailer have also been fulfilled, wherein the tests have followed the guidelines according to DIN 15918:2017:05, such that this electric bicycle is especially suited as a cargo bicycle. Further, it is referred to the ISO 4210 standards which are also met the bicycle frame and seat post of the electric bicycle according to the invention.

### Brief Description of the Figures

The accompanying figures illustrate exemplary embodiments of the disclosure and serve to explain, by way of example the principles of the disclosure and are not intended to be drawn to scale. The figures are included to provide illustration and a further understanding of the various aspects and embodiments, but are not intended to restrict the disclosure to the embodiment illustrated in the figures and are not necessarily to scale. Where technical features in the figures or detailed description are followed by references signs, the reference signs have been included for the sole purpose of increasing the intelligibility of the figures and description. For purposes of clarity, not every component may be labelled in every figure.

The term "at least of" as used in this disclosure means "one or more" of a desired choice.
FIG. 1 shows a perspective view of the bicycle frame according to an exemplary embodiment;
FIG. 2A shows an explosive view of a further embodiment of the bicycle frame;
FIG. 2B shows a detailed view of side elevation of the bicycle frame to illustrate the geometric design of the embodiment as shown in FIG. 2A;
FIG. 3A shows a detailed perspective view of the bicycle frame, including part of the rear portion, the seat tube and part of the middle portion including a cavity for an energy store;
FIG. 3B shows a perspective view of another embodiment of the bicycle frame with cables in the head tube and a cover of a part of the rear portion;
FIG. 4A shows a perspective view from below of the bicycle frame wherein a mudguard, a lever with cam plate and luggage rack is integrated in the rear portion of the bicycle frame and a seat post is inserted in the seat tube of the bicycle frame;
FIG. 4B shows a perspective view of another embodiment of the bicycle frame with a fork configured to be inserted the head tube;
FIG. 5A shows an explosive view of an energy store configured to be inserted into a cavity in the middle portion located adjacent the head tube;
FIG. 5B shows a perspective view of the fork blades and the steer tube of the fork;
FIG. 5C shows an explosive view of the fork illustrated in FIG. 5B
FIG. 6A shows the saddle with the seat post and notches therein;
FIG. 6B shows a side view of the seat post of FIG. 6A inserted in the seat tube of the bicycle frame;
FIG. 7A shows a perspective view of the seat post from the back;
FIG. 7B shows a perspective and oblique top view of the seat tube;
FIG. 7C shows the cross section A-A shown in FIG. 7A;
FIG. 8 shows a perspective view of the pivotable pin assembly;
FIG. 9A shows a perspective view of the pin assembly in open state or release position together with a part of the seat tube and part of a slide insert;
FIG. 9B shows an perspective view of the pin assembly of FIG. 9A pivoted;
FIG. 9C shows a perspective view of an interlocked state or locked position of the pin assembly being engaged with the seat tube;
FIG. 10A shows an enlarged perspective side view of a spring biased pin assembly in the recess of the rear portion of the bicycle frame;
FIG. 10B shows a perspective view of the pin assembly in combination with a cam plate interengaged in corresponding recesses of the seat tube;
FIG. 10C shows an enlarged perspective oblique top view of the pin assembly perspective view of an upper part of the pin assembly and the slide insert and a portion of the seat tube;
FIG. 11 shows a side view of an electric bicycle with luggage rack and basket;
FIG. 12 shows a schematic view showing schematically the electronic components of the bicycle frame;
FIG. 13 shows the schematic connection diagram between bicycle components;
FIG. 14 shows an enlarged perspective view of the middle and rear portion of the electric bicycle;
FIG. 15 shows load cases of the bicycle frame and the fork; and
FIG. 16 shows schematically the production of the bicycle frame using sliders.

### Detailed Description of the figures

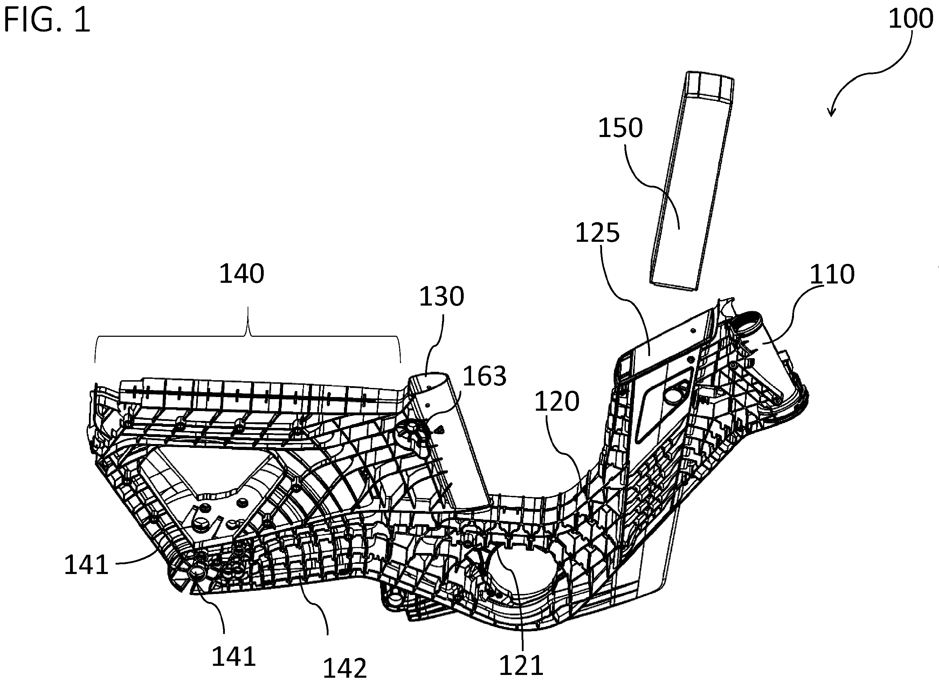

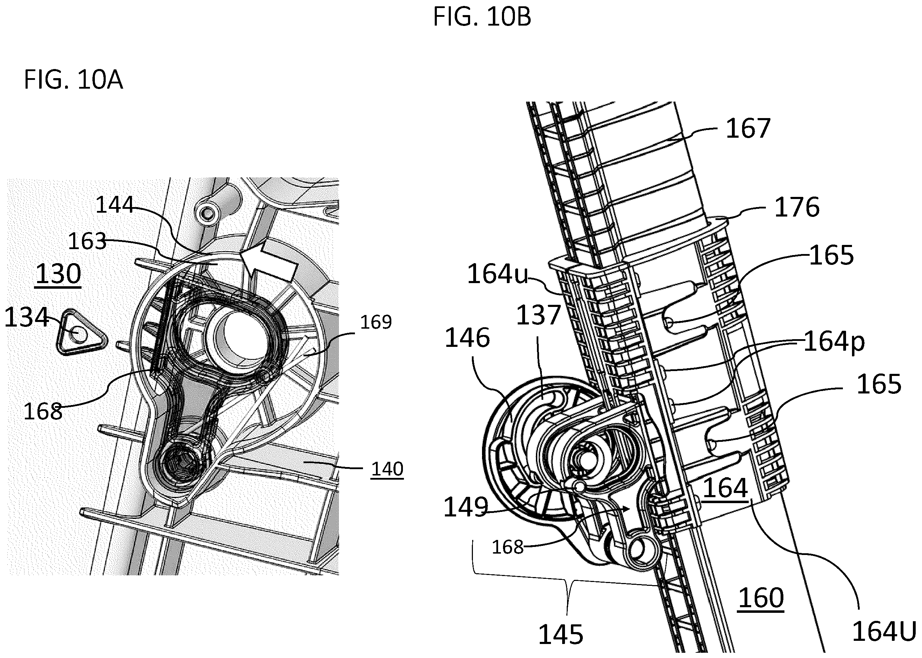

FIG. 1 shows a perspective view of the bicycle frame 100 for an electric bicycle formed by a unitary structure. The unitary structure, which is manufactured by reinforced thermoplastic material, comprises a head tube 110, a seat tube 130, a middle portion 120 and a rear portion 140. A plurality of reinforcing ribs such as ribs 142 in the rear portion are provided for reinforcement. The rear portion comprises a recess 163 or receptacle with side walls 144 for at least a part of a locking assembly (not shown, see FIG. 10A), configured to lock the height of the seat post (not shown). In the middle portion 120 a cavity for the bottom bracket 121 as well as a cavity 125 for an energy store 150 such as a battery is integrated. In order to connect to the rear wheel (not shown) the rear portion comprises opposing rear wheel bearings 141.

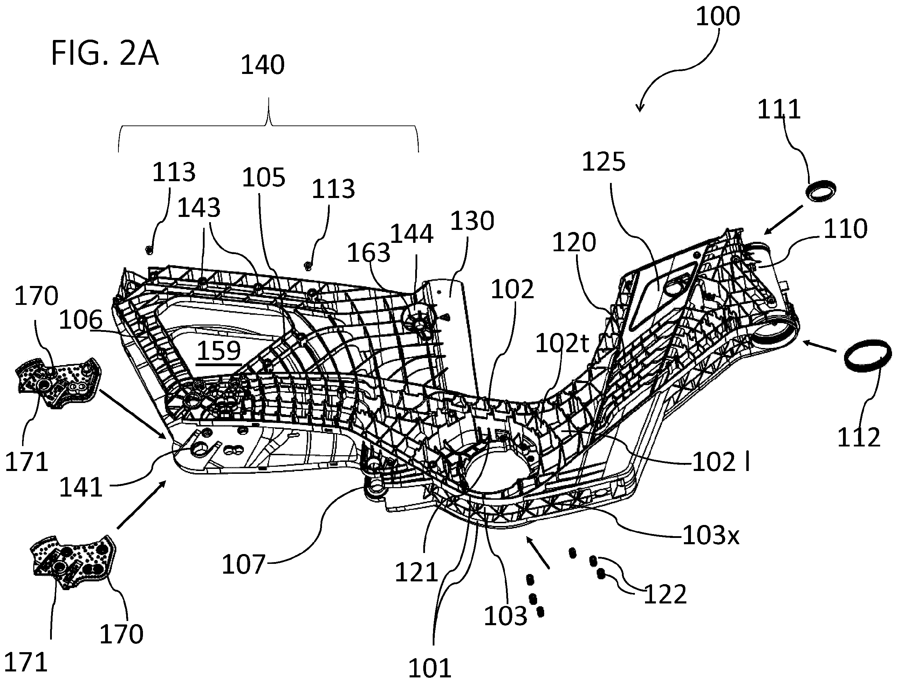

The explosive view shown in FIG. 2A shows the bicycle frame 100 as seen in FIG. 1, and furthermore components including the plastic 170 and metal insert 171 that can be connected to the thermoplastic material of the bicycle frame 100 by injection moulding.

A plurality of reinforcing ribs 102, 105, 106 are integrally formed with the bicycle frame to reduce weight without sacrificing rigidity. The ribs have substantially a uniform wall thickness, which is desirable both mechanically and aesthetically.

The ribs of the middle portion comprise longitudinal ribs 102 l extending preferably parallel to the longitudinal axis of the middle portion 120 at least in regions of the space between the head tube 110 and the bottom bracket 121. Further, there are transverse ribs 102 t substantially vertical 102 to the longitudinal axis of the middle portion. Said transverse ribs 102t form a lattice in combination with the substantially longitudinal ribs 102 I. In this way substantially square shaped structures are formed by the intersecting ribs 102t and 102 l, which are closed at the bottom by the respective surface of the middle portion 120, to stiffen the respective regions of the middle portion 120. Part or alternatively all (not shown) of the outer surface of the cavity 125 for the energy store has no ribs.

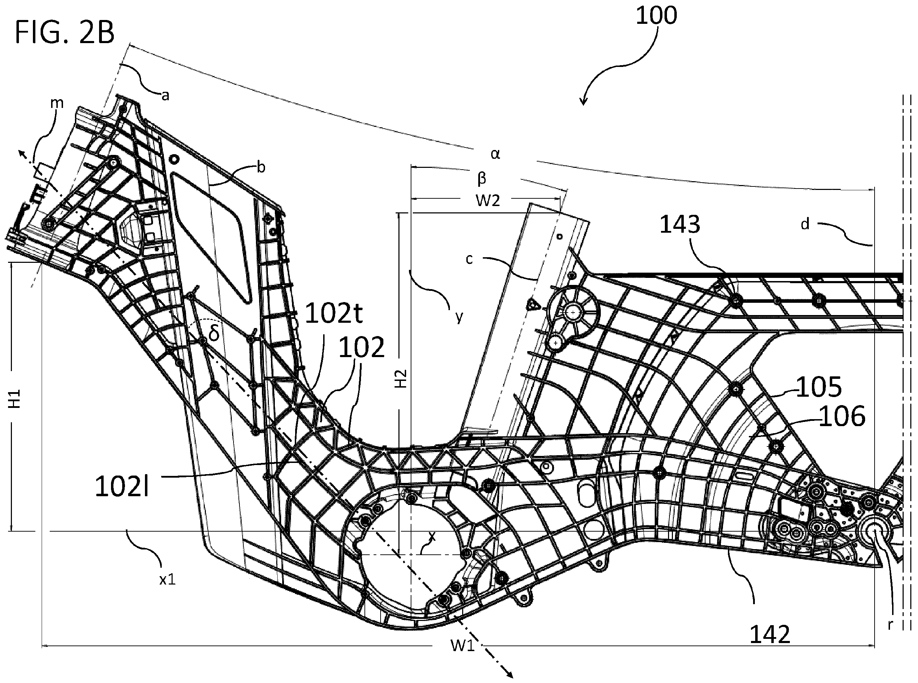

With continued reference to FIG. 2A, the outer peripheral region of the middle portion 120 above the bottom bracket 121 have ribs 102 which form substantially triangular shaped structures, which divide the inner area for better stability into smaller dimensioned fields than the regions of squared shaped structures. Thus, the operator of the bicycle can for instance pose its feet on top of this stabilized area, which is, as shown in FIG. 2B, in the side elevation of the bicycle frame 100 substantially horizontally orientated.

As illustrated in FIG. 2A the bottom portion below the bottom bracket 121 comprises parallel lower edges 101 which are integral with an inner grillwork therebetween. Said grillwork comprising X-shaped strips 103x and a longitudinal strip 103 parallel to the lower edges 101 of the bicycle frame 100.

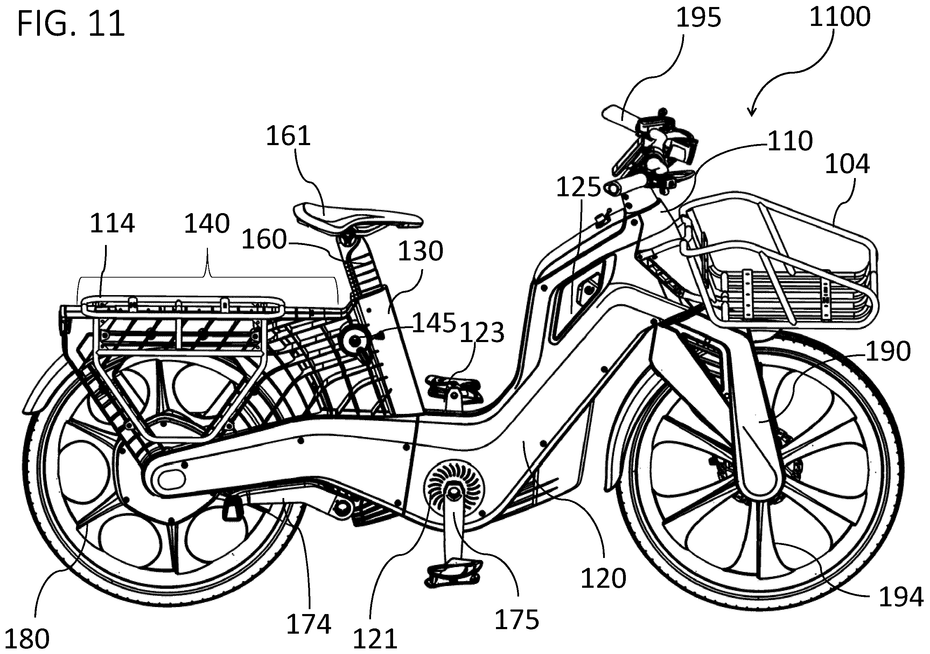

From each of the lower edge 101 there is a support attached with a bearing 107 for the respective kickstand (not shown, see reference sign 174 in e.g. FIG. 11).

In regions of higher mechanical loads such as the region above the bottom bracket 121 the distance between the ribs can be reduced for better strength. The rear portion 140 comprises a polygonal window 159 with rounded corners. The stability of the surrounding parts of the rear portion 140 is again provided by stiffening ribs 105, 106. Said stiffening ribs 106 are on the one hand spaced circumferentially about the center of the rear wheel hub and on the other hand substantially traverse (see reference sign 105) to these circumferential ribs 106. The circumferential ribs 106 in the vicinity of the rear wheel bearing 141 may be formed as radial ribs 105, that extend radially from the center of the rear wheel bearings 141. It should be noted that the ribs may be formed in other suitable patterns and directions than illustrated as long as at least part of said ribs are arranged to protrude at the inner edges of the window 159 as well as at the outer edges of the rear portion 140 to improve the mechanical load capability and stability at the edges. The use of stiffening ribs 105, 106, 102l, 102t etc provide dimensional stability while not adding weight to the bicycle frame 100.

FIG. 2A shows metal components like metal inserts (111, 112, 122) made of e.g. aluminium or of more rigid plastic (170) than the thermoplastic of the bicycle frame, which are configured to be inserted directly into the mould prior to the injection moulding process. During the injection moulding, the reinforced thermoplastic material is moulded partially or all around the inserts. The metal inserts of the head tube 110 are arranged preferably in the upper part of the head tube (see metal insert 111) and in the lower part of the head tube (see metal insert 112).

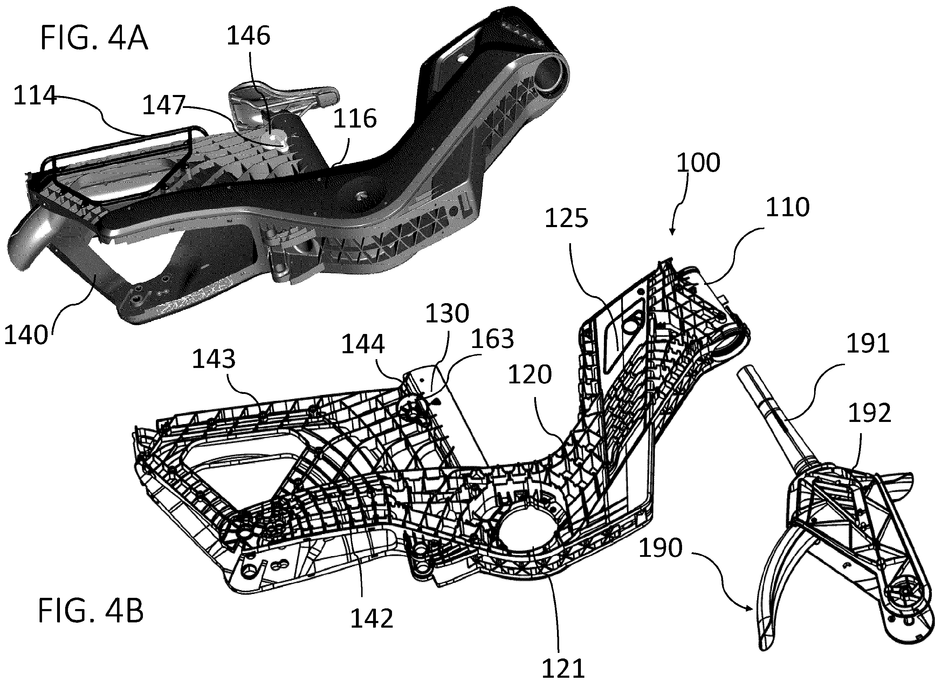

In general, there may be further one or more metal and/or plastic inserts in the vicinity of one or more of the following components in order to mechanically strengthen the respective region: the seat tube 130, the bottom bracket 121, a bearing of the rear wheel 141, a brake calliper and a luggage rack 114 (not shown, see e.g. FIG. 4A).

In the vicinity of each of the bearings 141 for the rear wheel a combination of one or more metal inserts 171 with a plastic insert 170 is provided to improve mechanical stability. The plastic insert 170 is a preform, which comprises reinforcing components (e.g. glass fibre content of 30 % by weight) and has a plurality of apertures, wherein one is configured for mounting the hub of the rear wheel and at least one for a brake component. For instance, a disc brake system may be attached, which typically includes a calliper housing.

Another object of a plurality of inserts is the secure and stable fixation of additional components to the bicycle. For instance, the inserts 122, preferably four to six metal inserts, are arranged in equal distance around the circular opening of the bottom bracket 121 in order to fix the crankshaft.

Further, FIG. 2A shows in the rear portion 140 below the luggage rack 114 support elements 113, which are not moulded around but configured to be screwed into corresponding threaded holes 143 in the injection mould, for attaching a rear luggage rack (not shown).

FIG. 2B shows a detailed side view of the bicycle frame illustrating the geometric design of the embodiment of FIG. 2A. The bicycle frame size can be characterised by various characteristic dimensions as lengths or angles between axes. More particularly, the frame can be characterised by the frame height H2. The height H2, is the vertical distance between the centre of the bottom bracket 121 and the centre of seat tube 130 and can measure between 35 cm and 55 cm, preferably 44- 48 cm. Further, the seat tube 130 can be defined by the length of the seat tube 130 along its vertical axis c. The seat tube angle β is about 18° between the vertical axis y and the longitudinal axis c of the seat tube, which corresponds to an angle of 72° between the axis c and the horizontal axis x. Other preferred seat tube angles β ranging between preferably 16° and 24° can be provided. Further, a seat tube angle β of 18 ° corresponds to a width W2 of about 19 cm between the centre of bottom bracket (where the x-axis and y-axis cross) and the top of the seat tube measured at the centre. The height H2 may measure preferably 44,5 cm. However, if other angles are selected other widths W2 between about 17 cm and 22 cm and other heights H2 would be the result.

Another characteristic angle of the bicycle frame 100 is the angle α between the longitudinal axis a of the head tube 110 and the vertical axis d through the center of the rear wheel aperture. In the shown exemplary embodiment α is 22°.

Further, Fig. 2B shows the height H1, defined as the vertical distance between the lowest center of the head tube (intersection of central longitudinal axis a of the head tube with plane formed by the circular lower edge of the head tube) and the horizontal axis x1, which is running through the axis r that is parallel to the rear wheel axis. This height H1 measures preferably about 35 cm.

Another characteristic dimension of the bicycle frame 100 is the horizontal distance W1 between the lower center of the head tube 110 and the vertical axis d which runs through the rear wheel axis r which is located in the center of the rear wheel aperture, which measures preferably about 1 m.

It is noted that the bicycle frame 100 is preferably dimensioned for the use with the following preferred nominal wheel diameters being 24 inches. Other dimensions of wheels in the range of 16 to 29 inches, can be deployed if the dimensions of the bicycle frame are adapted proportionally.

Fig. 2B shows further a central longitudinal axis b through the cavity 125 for an energy store 150 (not shown, see e.g. FIG. 1). Axis b forms an acute angle δ with the axis m of the middle portion 120. Other dimensions of the cavity 125 can be provided depending on the dimensions of the battery used. The substantially vertical extension nearly parallel to the vertical gravity force facilitates the insertion of the energy store.

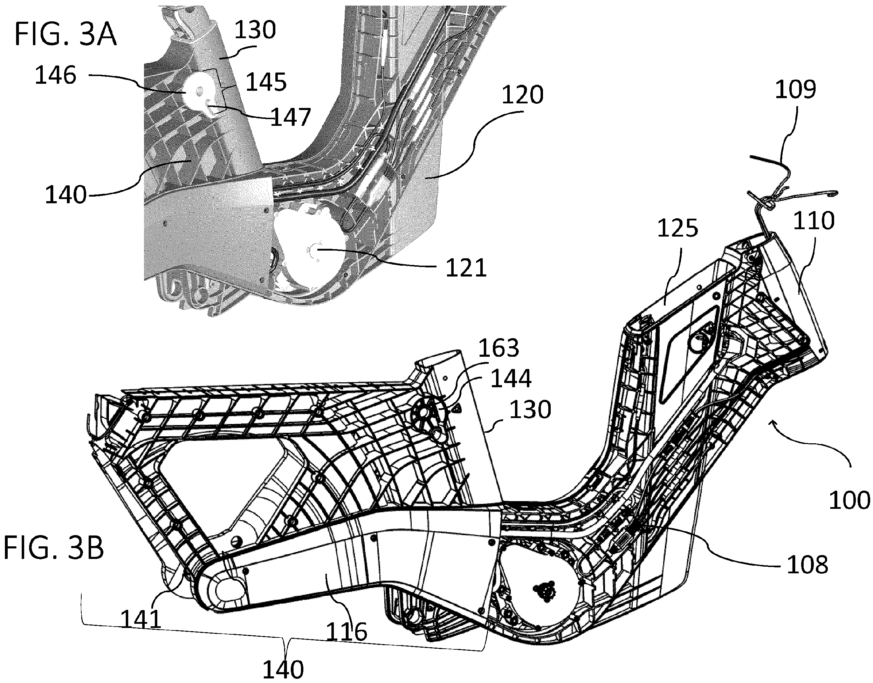

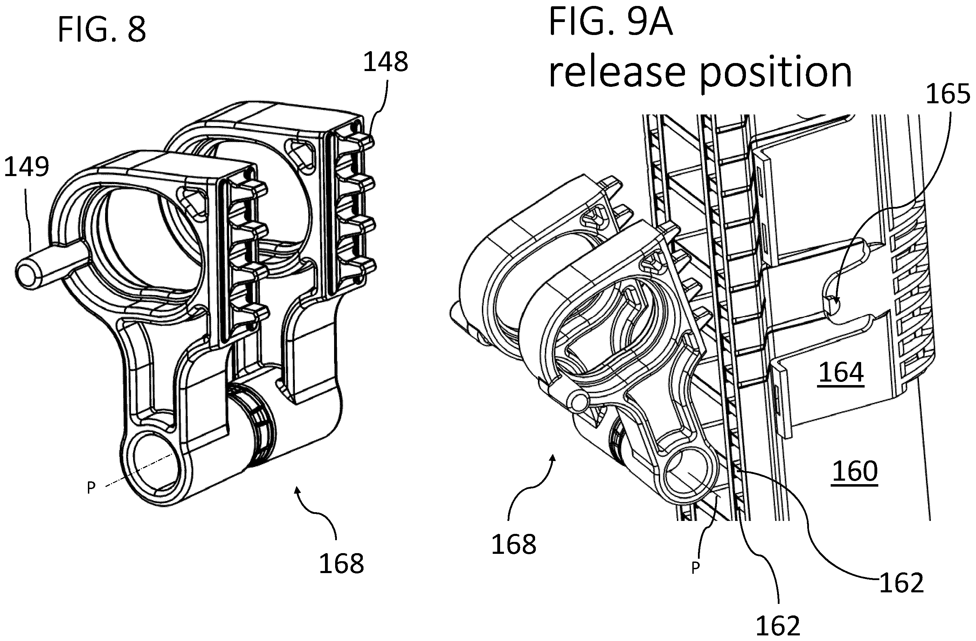

FIG. 3A shows a detail of the bicycle frame, including part of the seat tube 130, part of the middle portion 120, and the rear portion 140, which comprises a cam plate 146 of a locking assembly 145 made of reinforced thermoplastic. The cam plate 146 serves to couple with and guide a picker 149 (not shown in FIG. 3A see FIG. 8) of the pin assembly 168 (not shown in FIG. 3A see FIG. 8). The cam plate 146 comprises at its underside a guide rail or aperture to move the picker 149 from a release position to a locked position. For details of the pin assembly it is referred to FIG. 8, 9A to FIG. 10B.

FIG. 3B shows an extended view of the bicycle frame, wherein the rear portion 140 comprises a rear wheel hub support and at least one part of a luggage rack 114. The recess 163 and the side walls 144 of said recess accommodates to a pivotable locking assembly 145 (not shown) which is configured to move at least one pin 148 of the locking assembly 145 through an corresponding opening of the seat tube 130.

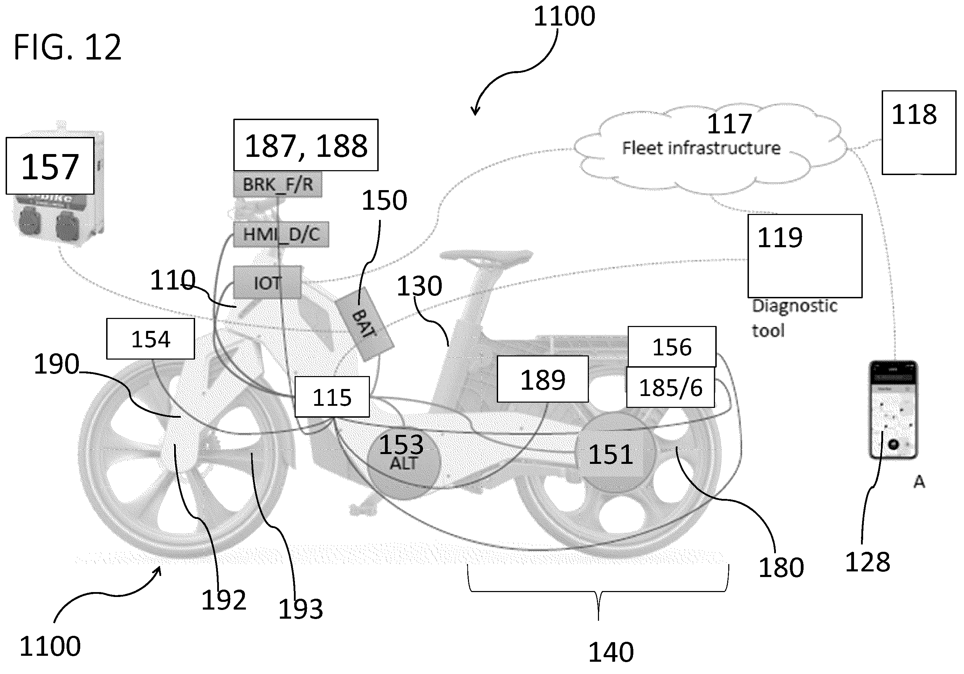

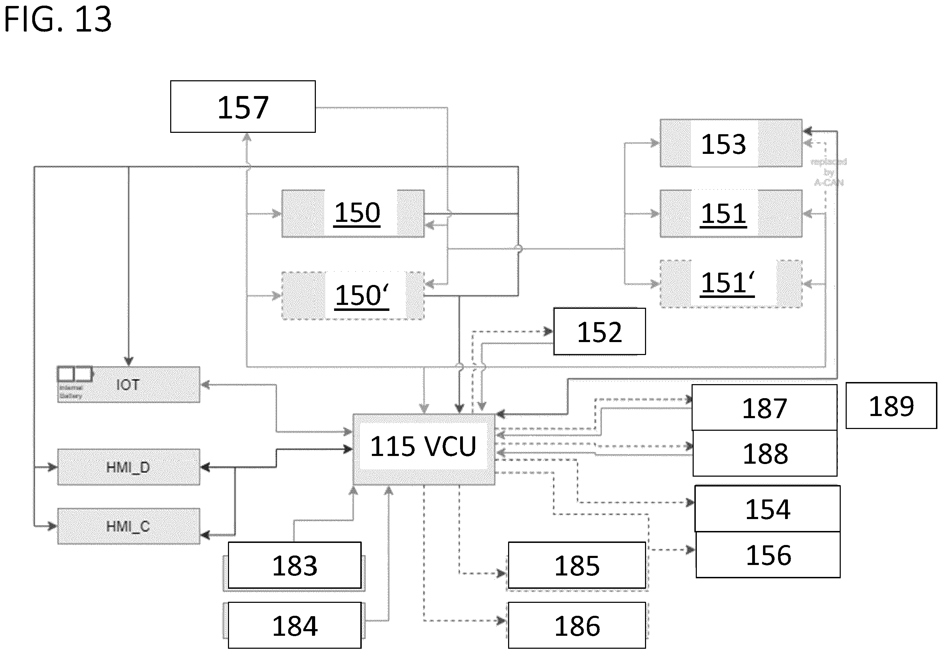

In addition to former illustrations of the bicycle frame 100 FIG. 3B shows cables 109, which are guided through the head tube 110. A preferred embodiment can provide cables 109 for the right brake and left brake, respectively (see reference signs 187 and 188 in FIG. 12). Reference sign 108 further indicates the location of cables and their internal frame routing in the middle portion 120. These cables 109 can electrically connect components of the bicycle (see FIG. 12 or FIG. 13 for exemplary embodiments for the use of cables). In order to protect the cables against dirt or water a partial cover 116 of the rear portion is used. The remaining uncovered part, where cables are guided between the head tube 110 and the bottom bracket 121, can also be covered for protection by means of a cover (not shown).

FIG. 4A shows a perspective view of the bicycle frame from below and shows e.g. the lever 147 and the cam plate 146 of the locking assembly 145, made from reinforced thermoplastic integrated into the bicycle frame 100. The lever 147 is movable from a released to a locked position and coupled via the cam plate 146. Further FIG. 4A shows a luggage rack 114 attached to the rear portion 140.

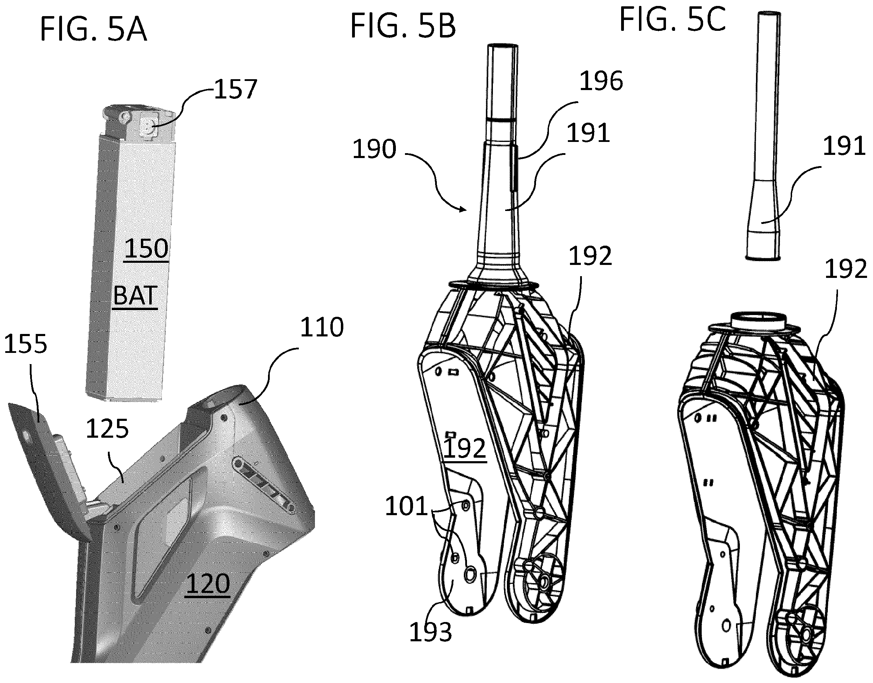

FIG. 4B shows a bicycle frame and a fork 190 with fork blades 192 and a steer tube 191. The latter can be inserted into the head tube 110 and is shown in more detail in Figures 5B and 5C.

FIG. 5A shows an explosive view of an energy store 150 being a battery (BAT) configured to be inserted into the cavity 125 in the middle portion 120 of the bicycle frame and adjacent to at least part of the head tube 110. Accordingly, an elongated cavity 125 is formed in the middle portion 120 and is configured to accommodate the energy store 150 such as a battery BAT. In order to protect the battery a cover 155 for the energy store cavity 125 is provided. The battery BAT is configured to store energy for motive power and electric equipment and can be a wet electrolyte Li-ion battery or a solid-state Lithium battery. An energy store is not limited to Lithium solutions but can also use different combinations and materials of the anode, cathode and electrolyte as long as the object is met to store energy and one or more of the following advantageous characteristics are met:
High volume electric energy density, high power density for quick charging and discharging rates, long cycle life, ion conductivity for ion transport between the electrodes and electrochemical stability and scalability.

Once the energy store 150 is inserted at least a part of the battery (BAT). i.e the bottom and at least a portion of the side walls are surrounded by the middle portion 120 for a suitable fit. The longitudinal axis of the battery (BAT) forms an acute angle (See angle in δ FIG. 2B) with relation to the longitudinal axis m of the middle portion. In this way the energy store 150 such as a battery (BAT) is easily insertable and exchangeable. The upper portion of the battery (BAT,150) comprises a plug charging connection 157. For easy access, the charging connection 157 may be combined with a respective recess or opening in the middle portion 120 such that the battery (BAT, 150) does not have to be removed from the cavity 125 during the charging process.

FIG. 5B shows a perspective view of an exemplary embodiment of a fork 190 with the fork blades 192 and a steer tube 191. Both components can be made of thermoplastic material. The steer tube 191 can alternatively be made of metal.

The entire fork can be manufactured by injection moulding with inserts such as metal inserts of aluminium in the regions where force is introduced. Alternatively to injection moulding, the fork 190 can be manufactured by thermoforming. If the steer tube 191 is made of thermoplastic material, two ribs 196 for limiting the steering angle can be provided on opposing sides of the steer tube 191. The steer tube 191 is to be received by the head tube 110, which comprises at least one metal insert configured to be arranged in the head tube (see reference signs 111, 112 in FIG. 2A). Such a metal insert 111 is configured to receive a corresponding bearing.

Further, in the vicinity of the axis of the front wheel (not shown) circular inserts 101, which are preferably made of metal are provided. The lowest insert 101 surrounding the circular aperture is configured for mounting the axle or hub of the front wheel 194 (not shown in FIG. 5B, see FIG. 11). The other inserts 101 are configured to attach a brake component including a calliper. For better stability these inserts 101 can be part of a plastic insert 193, which is preferably formed as a preform and is made of more rigid plastic than the thermoplastic material of the fork 190. On the side where the blades 192 face each other the preform of the plastic insert 193 is moulded around and comprises reinforcing components (e.g. glass fiber content preferably between 30 % to 60 % by weight). Apertures in the upper part of the fork blade 192 can be used to attach by means of a detent mechanism a mud guard (not shown) made preferably of thermoplastic material. FIG. 5B and 5C show on the outside of the fork blades 192 ribs for reinforcement. At least partially, there can also be reinforcing ribs at the inner side of the blades 192 of the fork.

FIG. 5C shows the explosive view of the FIG. 5B, wherein the steer tube 191 is separate. That is to say, the fork blades 192 can be combined with either a metal steer tube 191 or with one made from thermoplastic with a limited steering angle.

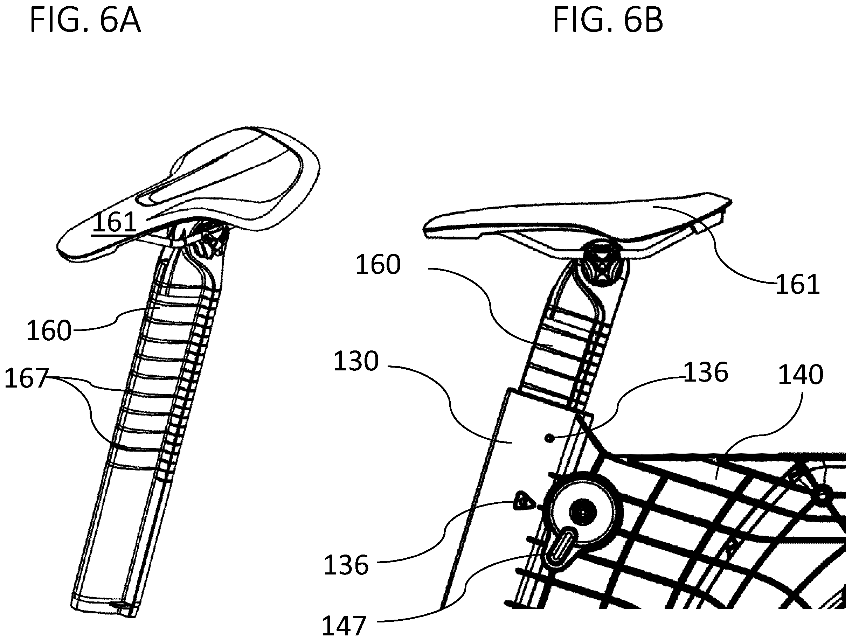

FIG. 6A shows a perspective view of the seat post 160. Said seat post 160 comprises notches 167, which extend transverse to the longitudinal axis of the seat post 160. Further, the saddle 161 is attached to the seat post 160.

FIG. 6B shows a two-dimensional (2D) side view of a portion of the seat tube 130 and an adjacent portion of the rear portion 140, wherein the seat post 160 shown of FIG. 6A is inserted in the seat tube 130. In the seat tube 130 one or more holes or apertures 136 for receiving one or more interengaging elements 165 of a slide insert are located. An exemplary embodiment of the slide insert 164 is shown in FIGs. 9A - 10B.

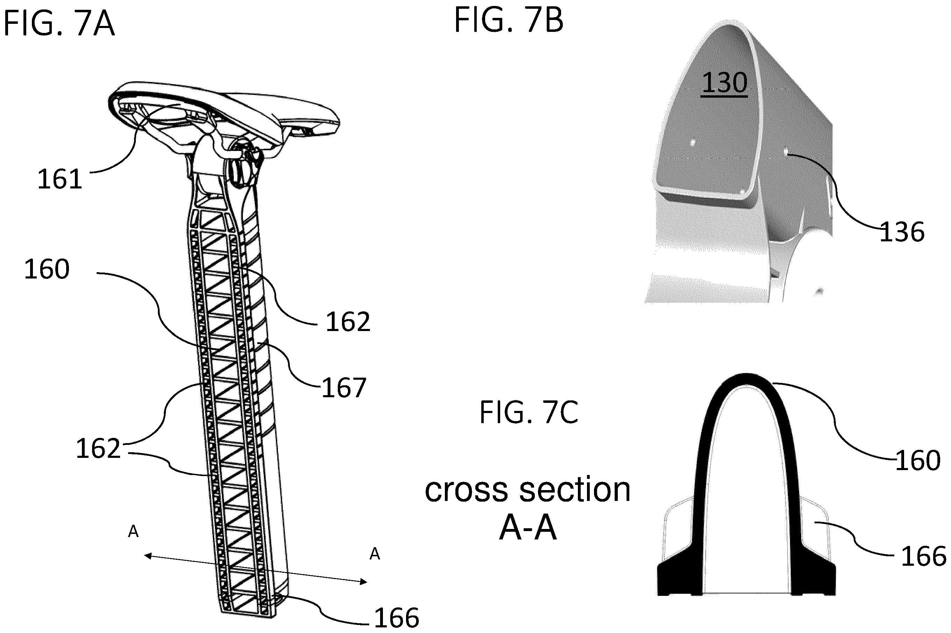

FIG. 7A shows the perspective view from the rear side of the seat post 160, where it comprises a abutment flange 166 at the free end of the seat post 160 (i.e. the end without saddle) to prevent a full extraction of the seat post 160 from the seat tube 130 (not shown, see e.g. FIG. 6B). The flange 166 is configured to abut with the bottom edge of the slide insert 164 (not shown) in case the seat post 160 is moved upward as far as possible.

Further FIG. 7A indicates an intersection line A-A for the cross section shown in FIG. 7C. Additionally, the seat post 160 manufactured by injection moulding of reinforced thermoplastic material comprises a hollow profile with a plurality of protruding ribs in order to engage with the pin assembly 168 of the locking assembly 145 (not shown), which is preferably a the quick release and locking assembly.

FIG. 7B shows a perspective view of the seat tube 130 from above. It is noted that the seat tube 130 has at least partially a non-circular inner cross section such that the rotation of the corresponding seat post 160 (not shown) around the seat post axis is limited or prevented.

FIG. 7C shows the cross sectional view along the line A-A of FIG. 7A, in order to depict the non-circular cross section of the seat post 160. If the seat post 160 is moved upward, the flange 166 will abut against the lower edge of the slide insert, which is shown e.g. in FIG 9A.

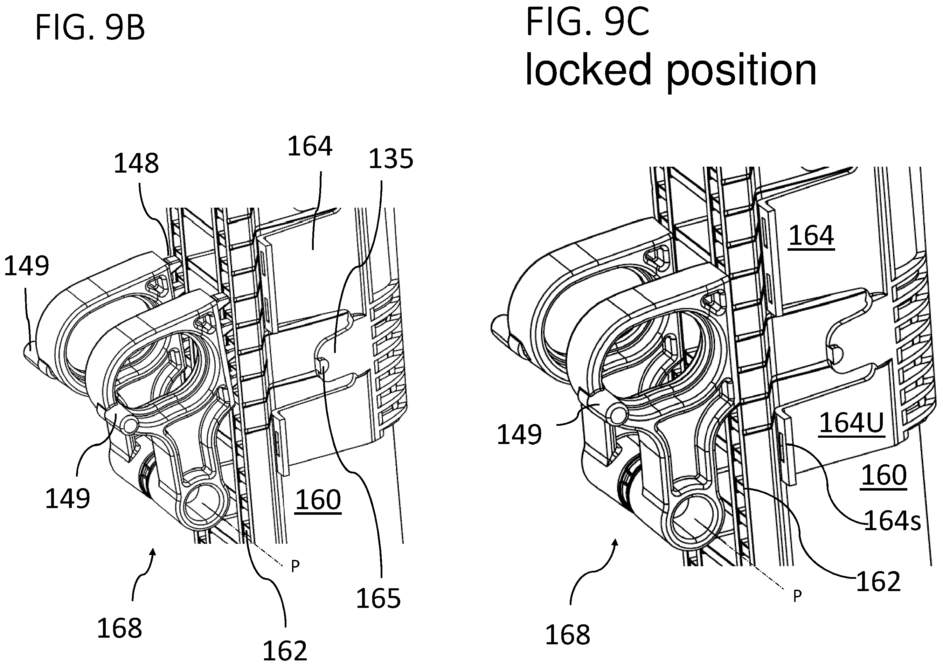

FIG. 8 shows a perspective view of the pin assembly 168. This preferred embodiment comprises two simultaneously pivotable and symmetrically arranged locking members, wherein each locking member has four pins 148. The locking members pivot around the pivot axis P. The entire pin assembly 168 is made of reinforced plastic. The pin 148 is configured to be moved through a corresponding opening of the seat tube 130 (not shown) in order to be movable from an open state or release position (FIG. 9A) to an interlocked state or locked position (see FIG. 9C). At least the tip or upper portion of the picker 149 is configured to be coupled with a cam plate 146 (not shown) such that the picker is moved along an elongated guide rail or aperture. By this guided movement the pin assembly 168 can be pivoted from the release position (open state FIG. 9A) to the locked position (FIG. 9C). ."

FIG. 9A shows a perspective view of the pin assembly 168 with a portion of the seat post 160, which is partially surrounded by part of the slide insert 164. The plurality of pins 148 are facing the back of the seat post 160 for interlocking and interacting with the corresponding ribs at the outer sides of the seat post 160. For changing the height of the seat post the axially displaceable seat post 160 is guided in a slide insert 164 positioned at an upper portion of the seat tube 130. The outer diameter of the slide insert 164 comprising 2 U-shaped parts 164U and 164u (see FIG. 10B) corresponds to the respective inner diameter of the seat tube 130 (not shown). Further the inner circumference of the slide insert 164 is adapted to the outer cross section of the seat post 160 for a perfect fit and smooth gliding when changing the height of the saddle.

Once inserted into the seat tube 130 (not shown in this FIG. 9A but e.g. in FIG.6B) the slide insert 164 can be fixated with at least one interengaging element 165. This interengaging element 165 can be configured as a resilient latch or as a simple protruding element, which may be supported by a elongated member 135 extending in the circumferential direction of the seat tube 130 and which is at least partially flexible or resilient. The resilient means such as the elongated member 135 of the at least one interengaging element 165 can be pressed in direction to the seat post 160 until it reaches the corresponding apertures 136 of the seat tube 130 and the pretension of the resilient means is configured to return the interengaging element 165 in a locking position in the apertures 136 of the seat tube. There can be also two interengaging elements 165 provided in the front part 164U (not shown, see e.g. FIG. 9C), which can be received by or interengage with the corresponding apertures 136 in the seat tube 130 (see FIG. 6B) to interlock the position of the slide insert 164 in relation to the seat tube 130.

FIG. 9B shows a perspective view of the pin assembly 168 of FIG. 9A after being moved into direction of the seat post 160. That is to say the four pins 148 are approaching the transverse ribs 162 of the seat post for finally engaging therein as shown in FIG. 9C. The interlocked state or locked position as shown in FIG. 9C can be further secured by the means of a spring element (not shown, see reference sign 169 in FIG. 10A).

FIG. 10A shows a preferred embodiment of a pin assembly 168 arranged in the recess 163 with side walls 144 in the rear portion 140 of the bicycle frame 100. The pin assembly 168 is spring biased by a spring element 169 toward the locked position (see arrow illustrating the force in the direction of the seat tube). This is advantageous because the movement in direction to the seat tube 160 for engagement into the corresponding recesses between the ribs 162 of the seat tube 160 (shown e.g. in FIG. 10B) is securely fixated by the spring element 169.

FIG. 10A gives details of the form of the recess 163, which has curved side walls 144 comprising a substantial circular form (see circular centre with radial spokes behind the pin assembly 168). At the bottom, there is a curved projection, which receives the pivoting part with the pivot axis P of the pin assembly 168. The nearly circular form of the recess 163 is configured so that the locking members with the pins 148 can be sufficiently pivoted away from the seat tube 130 in order to release the seat post 160 in the open state or release position.

FIG. 10B shows a perspective view of the pin assembly with an associated cam plate 146 in the locked position and its connection to the seat post 160. The cam plate 146 has a guide rail or aperture 137 for receiving the picker 147. Another cam plate 146 (not shown) can be arranged on the opposite side. The cam plate 146 has integrally formed or attached to the outer surface of the cam plate 146 ( which side is not visible in FIG. 10 B (see FIG. 3A) a lever 147 which is configured for a pivoting movement of the pin assembly 168.

The slide insert 164 comprises a flange 176, which abuts with the upper edge of the seat tube 130 (not shown) once inserted therein. As noted above there are two U-shaped components of the slide insert 164, namely the front element 164U and the back element 164u each having a flange in order to be connected such that they form the flange 176 surrounding the entire the upper end of the slide insert 164. The larger U-shaped front element 164U surrounds a bigger part of the seat post 160 than the smaller U-shaped back element 164u.

The back element 164u of the slide insert 164 is arranged at the back and is parallel to the back plane of the seat post 160. The legs of the U of element 164u are in right angles, parallel to the respective side walls of the seat post 160 and cover the ribs 162. The back element 164u has protrusions 164p that can engage like lugs with corresponding apertures of the front element 164U. Such apertures can be in form of slits 164s as shown in FIG 9C, whereina releasable click connection is configured to lock the two elements 164u and 164U of the slide insert 164. After insertion of the slide insert 164 into the seat tube 130 the click or snap connection between at least one protrusion 164p and the slit 164s is further hold in place by the corresponding inner surfaces of the seat tube 130 (not shown).

Both elements 164U and 164 u of the slide insert 164 have portions with ribs for better stability. The back element 164u of the slide insert 164 has at the level of the pins 148 an aperture such that the pins can engage with the recesses between the ribs 162 of the seat post 160.

The pin assembly 168 with the cam plate 146 forms a locking assembly 145, which is preferably a quick lock and release assembly using the spring element 169 as shown in FIG. 10A.

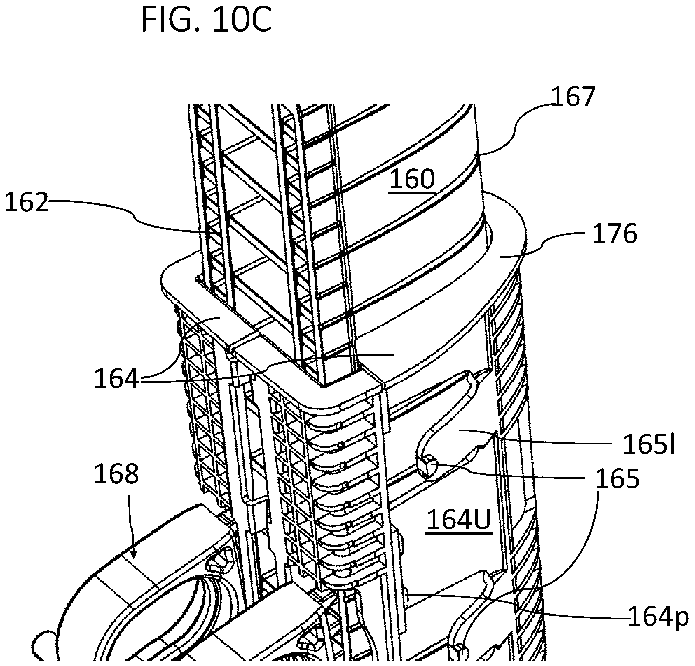

FIG. 10C shows a perspective oblique view from above of a part of the seat tube 160 having a slide insert 164 attached thereto and part of the pin assembly 168. The flange 176 is fully surrounding the seat post 160 and can be brought into abutment with the upper edge of the seat tube 130 if inserted therein. In this way the flange 176 covers any potential gaps between the seat post 160 and the seat tube 130. The slide insert 164 is substantially surrounding the outer circumference of the seat post 160 and extending in parallel direction to the longitudinal axis of the seat post 160 and can measure between about 0,25 to 0,3 of the full length of the seat post 160. This design results in the advantage that there is no play between the parts i.e. an upper region of the inner surfaces of the seat tube 130 are below the flange 176 in close fit with the outermost surfaces of the slide insert 164. Further the inner surfaces of the seat post 160 can smoothly glide in the precisely manufactured inner circumference of the slide insert 164.

FIG. 10C shows a detailed sectioned view of the pin assembly 168 which can be pivoted in direction to the seat post 160.

FIG. 11 shows a complete side view of a preferred embodiment of an electric bicycle 1100, wherein the frame is formed as a unitary structure and manufactured by injection moulding of reinforced thermoplastic material. The bicycle comprises a head tube 110 with a fork 190 and a steering portion 195, preferably a handlebar with handlebar grips, and above the front wheel 194 a bicycle basket 104.

An elongated cavity 125 is formed in the middle portion 120 to accommodate an energy store 150 such as a battery (not shown) configured to store energy for motive power and electric equipment. A seat post 160 is inserted at a predetermined height in the seat tube 130. The middle portion 120 comprises a bottom bracket 121 with the crank arm 175 and cycle pedals 123, wherein the crank arms 175 are configured to transfer the pedalling power by connecting the pedal 123 to the bottom bracket 121. The rear portion 140 is configured to engage a rear wheel 180, which can be between 18 inches to 28 inches, preferably of 24 inches, and further supports the luggage rack 114. A kickstand 174 of thermoplastic material is arranged in the rear portion 140 and can be pivoted, wherein FIG. 11 shows the kickstand 174 folded up. In case the electric bicycle 1100 is parked in a parking position the kickstand 174 can be folded down (not shown).

FIG. 12 shows a schematic view illustrating the electronic components of an electric bicycle 1100 comprising a unitary frame 100, a front wheel 194, a rear wheel 180 and a fork 190 with fork blades 192. Said main components are made of reinforced thermoplastic material. The Vehicle control unit 115 (VCU) can also be called central control unit. Said the VCU is designed to form a central junction and connects all electric components with cables as schematically shown in FIG. 12 and further shown in a plugging diagram in FIG. 13.

The central control unit 115 or vehicle control unit (VCU) is arranged in the middle portion below the energy store 150 such as a battery BAT. Electrical components such as a front light or lighting 154, back light 156, indicator left 185, indicator right 186 and an actuator bike lock 189 can be controlled by the control unit 115. A human machine interface (HMI) is connected via a cable to the control unit 115. The HMI is configured for mobile machines and may integrate one or more elements selected from the group comprising:
a display (HMI_D) including e.g. screen and optionally buttons or a touchscreen, control elements (HMI_C) including e.g. a button unit, switches or keys ; lights, operating elements, input elements as buttons. In this way the HMI can have a plurality of interfaces. For instance, the HMI can be used to display information about the electric bicycle such as power, battery state, RPM, speed, GPS position data.

The human machine interface (HMI) can comprise a processor which can be used in addition to the control unit 115 (VCU) or as the control unit 115 itself. The control unit 115 (VCU) and/or HMI may comprise at least one memory. Alternatively or in addition to a local memory a cloud based system 117 can be used for externally saving data in a network or collecting data such as of a fleet infrastructure in order to manage a fleet (reference sign 118: fleet management).

The control unit 115 is connected to an IOT device, which serves as a gateway for wireless networking with other elements and services. The networking can be realized via the internet by means of e.g. a mobile network of a mobile device such as a smart phone or locally e.g. via Bluetooth or RFID. Further, other features as GPS, LED-connections for showing the status of at least one electric component, a motion or accelerator sensor can be integrated in the IOT device.

In this way the operator of the electric bicycle can use the IOT device in connection with a mobile smart device in order to obtain data and to provide a tool for various purposes such as for fleet management 118. In a preferred embodiment the fleet management 118 may be a cloud-based software, which manages the vehicles of the fleet via access over the IOT device and comprises a plurality of functions. For instance, the positions of the vehicles of the fleet can be monitored using fleet information as geographical locations of the bicycles of the fleet. Another function of the fleet management 118 is indicating the charging state of each vehicle. Finally, messages could be displayed remotely on displays of selected vehicles.

Further the IOT device and/or the control unit 115 and optionally the HMI can provide application and apps (see reference sign 118) for the electric bicycle 1100 preferably in combination with cloud based systems (reference sign 117). That is to say by means of at least one of said electric devices of the electric bicycle 1100 one or more applications 128 or applets such as Internet-of-Things (IoT) applications can be deployed. Such loT applications are advantageously highly customizable and can be predictive for maintenance of the bicycle.

In this way integration and optimization of Smart City applications can be provided. Further, by using external data storage big data can be accessed and artificial intelligence software for analysis of data can be used. Applications 128 may be based on software and programs, which can be selected from the group comprising fleet management software; operating system software and programs; software applications for Internet of Things (IoT) enabled devices; network operating system programs; computer software that provides real-time, integrated management intelligence by combining information from various databases and presenting it in an easy-to understand user interface software in the HMI; graphical user interface software; downloadable computer software applications; database management software; predictive maintenance software and interactive software; software for orchestrating storage and consumption of energy; and downloadable cloud-computing software for connecting devices of the bicycle or mobile devices to a cloud computing platform. The loT can also be used to collect vital data of the operator by a respective device and integrate this information e.g. for the control of the power generator, to increase the assistance if needed.

FIG. 12 further shows a so called "diagnostic tool" 119 which is configured to read or receive diagnostic data for diagnosing one or more components of the electric equipment of the bicycle 1100. Further, the diagnostic tool 119 is preferably configured to change settings and/or update the software of the control unit 115. In this way, flash programming of embedded software can be done inside ("in-line") the vehicle without removing the control unit 115 from the electric bicycle 1100. The diagnostic tool 119 may be a processor with a corresponding interface card or software.

An energy store charging system 157 can be used to recharge an accumulator or battery (BAT) of the electric bicycle 1100. This charging system 157 can be an usual loading system or a high performance charging system (HPC). In case the bicycle is designed for high-voltage the battery (BAT) has to be designed accordingly and the thermal management needs to be considered. Regardless of the battery type, it is preferred to provide a battery management system in the VCU 115. In this way the battery utilization of the electric bicycle can be optimized and damage to the battery can be avoided.

The voltage of an energy store 150 like a battery (BAT) can be also charged by the pedal alternator 153, wherein the operator uses both feet to drive the pedals to drive the alternator 153. The latter may also be called a pedal generator for generating electrical power using physical input. In a preferred embodiment, a voltage regulator can be provided either integrally or separate to the alternator 153, configured to control the output of the alternator 153 in accordance with a desired voltage level of the battery. The desired voltage level to which an energy store 150 is charged is dependent on the temperature of the battery (BAT), wherein at high temperatures the battery needs to be charged to a lower voltage than at sub-zero temperatures. To account for this temperature dependency, the voltage regulator is connected to a temperature sensing device which is located such that the temperature of the battery can be measured accurately.

The electric bicycle 1100, preferably a pedelec (pedal electric cycle), is power-assisted and can travel with a pedalling force supplemented with an electromotive power provided by the electric motor 151, which is located at the hub of the rear wheel 180. Alternatively the electric motor 151 can be located at the front wheel 194. One way to assist pedaling is typically provided with a force combining mechanism for combining the pedalling force introduced by means of the pedals with the electromotive power of the electromotive motor 151.

Whereas usually a chain transfers a force of a pedalling person to the wheels alternatively chainless solutions can be provided. This has the advantage of saving space and avoiding complicated structures and maintenance of the chain. Based on a pedal speed sensor configured to sense the speed of the pedal the rotation speed of the electric motor 151 can be controlled by the control unit 115. That is to say, the vehicle control unit 15 controls the current supplied to the motor 151 so that the rotation speed of the rear wheel 180, which is equivalent to the rotation speed of the motor 151 follows the pedal speed. Further based on the pedal speed a pedal torque can be calculated, which may also be used as input for the control of the electric motor 151.

FIG. 13 shows the schematic connection diagram between bicycle components, which include electric components of the electric bicycle 1100 as shown in FIG. 12. The control unit 115 is central. For security, the control unit 115 is electrically connected not only to the actuator of a bike lock 189 but also to a battery lock 152. The energy store 150 comprises two batteries BAT 1 and BAT2. Each of said batteries can supply power to the human interface components as HMI controller such as a button unit (HMI_C) or a display (HMI_D). For charging the battery, either the charging connection 157 or the connection to the alternator 153 can be used. The system architecture shows as preferred embodiment an optional second electrical motor 151', which can support e.g. a wheel axis of a trailer. In this way the system is especially adapted for cargo bicycles.

Further components, which are not shown, can be connected to the control unit 115: Sensors of temperature or sensors which can measure information related to wear or failure of various bicycle components. In a preferred embodiment, the manufacturing method of injection moulding can be advantageously used to provide sensors embedded in the thermoplastic material especially in regions of increased load.

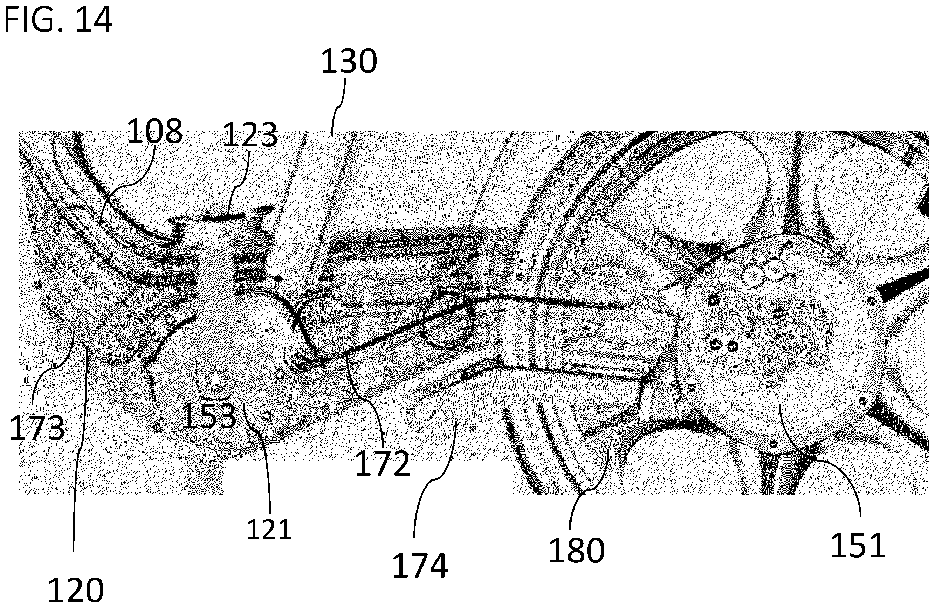

FIG. 14 shows a perspective partial view of the bicycle frame in order to show at least partially the guiding of cables. Reference sign 108 shows cables and internal frame routing in the middle portion 120. Further, the partial view also shows internally guided cables 172 in the rear portion, which connect the electric motor 151 to the energy store 150, which is also connected to the pedal alternator 153. The cables 108 and 173 in the middle portion 120 are partially routed parallel and a single electric line is designed to be split into a plurality of lines in order to supply various consumers e.g. lights, HMI, IOT etc.

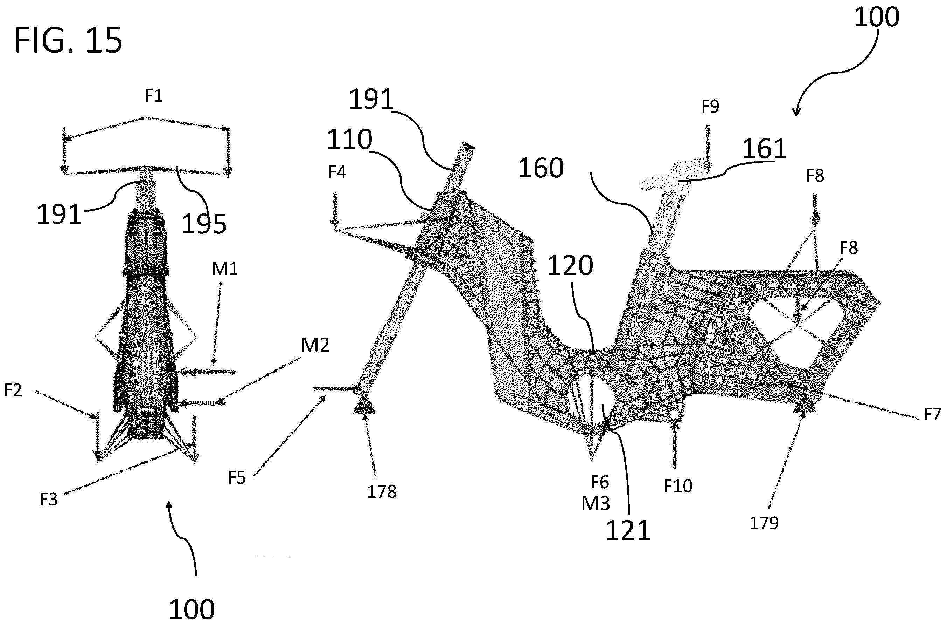

FIG. 15 shows a front view (left) and a side elevation of the bicycle frame 100 with load cases of said bicycle frame 100 comprisinga steer tube 191 and a seat post 160 with saddle 161. The calculations are based on a maximum total weight of the bike including rider and cargo of 160 kg. The maximum total weight of the bicycle for standardised tests according to DIN 79010:2020-2 have been assumed to be maximum 250 kg.

The fibre reinforced thermoplastic material is ideal, where high rigidity is required. Accordingly, one of the main design objectives was the rigidity. The reinforcement can be enhanced if needed, depending on the requirements placed upon a component of the bicycle frame in terms of load criterion. The bicycle frame 100 uses further structural reinforcement like ribs or inserts to meet the load cases as shown in FIG. 15.

The load cases have been simulated for the design of the distinct components and are minimum loads, wherein security or safety factors of at least 1,5 can be assumed. That is to say the bicycle components as the bicycle frame 100 or fork 190 are actually stronger than it needs to be for the loadings shown in FIG. 15.The load cases are for an exemplary embodiment of a bicycle frame 100, which is suited for use with 24 inches wheels. This bicycle frame 100 has preferably a frame height H2 of about 445 mm and has similar dimensions as shown for example in FIG 2B. A characteristic maximum weight of the bicycle frame 100 without inserts about 8040 g. The seat posts used for the following load cases and simulations weighs about 470 g.

FIG. 15 shows on the left side a front view of the bicycle frame 100. Once the steer tube 191 is inserted into the head tube 110 of the bicycle frame 100 a typical vertical load case is the expected or simulated force F1 of an operator steering the bicycle, which is directed vertically down from both sides of the steering portion 195 (schematically shown). The steering portion 195 can be designed as a handlebar (see e.g. FIG. 11).

The loading case F1 can reach a maximum of 1000 N and can be split into 2 forces located at each end of the steering portion 195.

For measuring the resistance of the frame rigidity also lateral forces are considered, which may mainly be introduced when riding out of the saddle. At the bottom bracket 121 of the middle portion 120 of the bicycle frame, equal loading cases F2 and F3 indicated, which are attacking symmetrically downward on both sides of bicycle frame 100. This load cases F2 and F3 simulate the so called out of saddle ride (German: "Wiegetritt" i.e. weighing ride), wherein the bicycle is driven riding out of the saddle. This loading is higher than the more stable case if the driver is driving in sitting. F2 and F3 are each about 1300 N and show that the bottom bracket rigidity or out of saddle rigidity of the bicycle frame according to the invention is sufficient.

It is noted that the components of the electric bicycle according to the invention fulfil at least required norms and passed related tests such as of the EN 15194 as for example of part 6: "Frame and fork test methods" and DIN 79010 for cargo bikes, which need to meet for forks according to the test in line with DIN 79010: 2020 450 N. The inventive bicycle frame 100 complies with DIN 79010: 2020 standard for dynamic test with pedalling forces wherein the loads can be about 1200 N.

The homogeneity of the thermoplastic material allows for reliable calculations and simulations. Simulation results show that the following laterally attacking forces at the bottom bracket 121 caused by torques can be met by the present design:
- M1 being the brake torque in the height of 300 Nm;
- M2 being the torque at the torque support and directed axially parallel to the axis of the front wheel.

By providing lateral stability, vibrations during the operation of the bicycle can be minimized.

With regard to the bicycle frame 100, the load case F5 of the bottom of the steering tube 191 is absorbed by a support 178 having two translatory degrees of freedom into the y- and z-direction. According to the simulation, the reinforced thermoplastic material at the support 178 can, under normal loading, absorb a force F5 of about 1200 N. Further, at the head tube 110 a bicycle basket can optionally be attached and a load case F4 of 4*150 Nm = 600 N that is to say 150 N for each of the four attachment points of the bicycle basket can be assigned while maintaining stability.

The loads of the sprocket and crankshaft at the bottom bracket 121 are introduced into the bicycle frame 100 at the positions of the metal inserts (see FIG. 2 A showing an exemplary embodiment with 6 metal inserts), connecting the bottom bracket 121 with the bicycle frame 100. At these connection points of the bottom bracket in the middle portion 120 both a force F6 and a torque M3 are received. In the simulated load case the vertical force of a user dependent bottom bracket force F6 is 1300 N (132 kg), assuming the force F6 is transmitted to a pedal in its lowest position when the full weight of an operator is applied. Further a counter torque M3 of the power generator (not shown) of maximum 200 Nm can be absorbed of the thermoplastic material in the vicinity of the bottom sprocket 121 (indicated by reference sign 121 but not shown in FIG. 15). The force F6 bottom bracket and torque M3 are directed to each of a plurality of metal inserts 122 (see FIG. 2A), preferably 4 to 6 metal inserts, which are arranged around the circular opening of the bottom bracket 121 in order to fix the crank shaft.

The load case F9 of the saddle which can be absorbed by the saddle post is 2000N (corresponding to a maximum of about 204 kg). This corresponds to the required saddle post stability according to strength testing in line with DIN 79010. The saddle post locking fulfils also DIN ISO 4210-9 requirements, for example dynamic test standards according to 4.4 with a loading of 1000 N and 200 000 load cycles.

Simulation results according to the invention show that the safety requirements for the bicycle frame 100 can be met if a wheel geometry of 24 inches is assumed. The electric bicycle is further designed as a cargo bike and has in the back portion a support 179 having three translatory degrees of freedom into the x,y- and z-direction.

A load case F7 represents the tensile load under consideration of acceleration or decelaration, respectively, if an attached trailer has a maximum weight of 60 kg. The load F7 safely absorbes a force of about 270 N (28 kg).. The rear portion 140 can absorb a maximum load case F8 for luggage of in total 600 N (about 61 kg) each. That is to say if there are four support elements 113 for the luggage rack provided (two on each side) then F8= 4*150N resulting in an additional payload of in total 600 N, wherein the acceleration is considered. Tests for a potential connection with a trailer have shown that the requirements as tested in analogy to DIN 15918:2017:05 have been met. Thus, the bicycle frame is especially suited for use with cargo bicycles.

The design of the cargo pedelec is according to the standardized norms as of the DIN 79010 for Cargobikes (Cycles - Transportation bikes and cargo bikes - Requirements and test methods for single- and multi-track cycles) and thus does not surpass the maximum permissible weight of 300 kg. The DIN 79010 also refers to electromotor assisted cycles (with a maximum rated power of 250 W and cut-off speed of 25 km/h).

In the parking position and if the kickstand is unfolded a load case F10 of the kickstand of maximum 1800N was simulated.

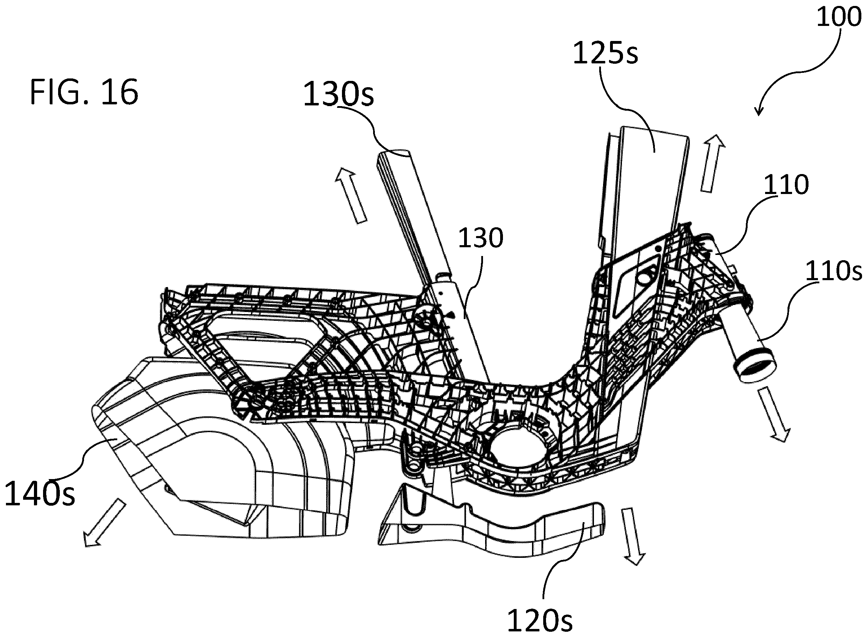

FIG. 16 shows the method of manufacturing the bicycle frame 100. In order to produce the complex rib structure as well as the apertures or recesses from one single piece it is required to not only use a single mould but also a plurality sliders. Using the sliders when injection molding, even the most complex 3D structure of the bicycle frame 100 can be easily achieved in a high number. The following sliders are used: Slider 110s for manufacturing head tube, slider 120s for manufacturing bottom cavity in middle portion, slider 125s for manufacturing cavity 125 for the energy store; slider 130s for manufacturing a seat tube and slider 140s for manufacturing the cavity in the rear portion. The arrows indicate the direction to remove the sliders after the injection moulding process. It is noted that the sliders can have a collapsible core.

According to a preferred embodiment the method further comprises connecting one or more inserts of metal or plastic into regions of higher mechanical loads by backmoulding at least a part of one or more inserts for connecting in a force- and/or form-fitting manner. The additional reinforcing components such as metal inserts are provided in the single mould for the bicycle frame and together with the use of sliders and preferably automated collapsing cores mass production of off-tool bicycle frames with an excellent accuracy can be produced. In this manner a manufacturing method is provided wherein an off-tool bicycle frame can be provided wherein no further process steps to be foreseen.

In conclusion, the bicycle frame 100 according to the invention has excellent stability characteristics and can be used in a wide field of applications including cargo cycles. The component parts of the electric bicycle as bicycle frame and fork utilizing injection moulding technique enables to produce components of relatively high strength that can resist load cases as mentioned above in relation to FIG. 15 and meet the requirements of DIN 79010 for cargo bicycles, EN 15194 for E-Bikes and/or ISO 4210. Further, the bicycle has aesthetically desirable appearance and can be combined with covers to further protect the complex structure from dirt etc. Providing a cavity and electric connections the bicycle can receive an energy store and be electrically operated. Further an alternator or power generator can be advantageously used to charge a rechargeable energy store such as battery. Since the bicycle frame and the fork according to the invention meets high safety requirements, bicycles can be used as road cycles. In particular, the bicycle frame and fork is suited to be used for fleet bikes because they can be rapidly produced by injection moulding in large quantities and in operation be easily maintained.

### Reference List

- 100: bicycle frame
- 101: inserts for mounting components as brake or axle
- 102: ribs of middle portion
- 103: longitudinal strip
- 104: bicycle basket
- 105: ribs transverse to circumferential ribs
- 106: circumferential ribs
- 107: bearing for kickstand
- 108: cables and internal frame routing thereof in the middle portion
- 109: cables
- 110: head tube
- 111: upper metal insert of the head tube
- 112: lower metal insert of the head tube
- 113: support elements for luggage rack
- 114: luggage rack
- 115: control unit
- 116: partial cover of rear portion
- 117: network -fleet infrastructure
- 118: smart device such as smart phone
- 119: diagnostic tool
- 120: middle portion
- 121: bottom bracket
- 122: insert for bottom bracket for fixing a crank shaft
- 123: cycle pedal
- 125: cavity
- 130: seat tube
- 134: opening of the seat tube for locking assembly
- 135: elongated member to support the interengaging element 165
- 136: hole for receiving interengaging element 165 of slide insert
- 137: guide rail or aperture for receiving picker 149
- 140: rear portion
- 141: rear wheel bearing(s)
- 142: ribs in rear portion
- 143: threaded holes for luggage rack
- 144: side walls of recess or receptable
- 145: locking assembly comprising at least a pin 148 and cam plate 146
- 146: cam plate with guide rail at its underside
- 147: lever connected to cam plate
- 148: pin
- 149: picker of pin assembly
- 150: energy store as e.g. battery
- 151: electric motor
- 152: battery lock
- 153: alternator or power generator
- 154: front light or lighting
- 155: cover for energy store cavity
- 156: back light or lighting
- 157: charging connection
- 158: charging station
- 159: polygonal window in rear portion 140
- 160: seat post
- 161: saddle
- 162: transverse ribs for interengaging with pin
- 163: recess
- 164: slide insert
- 165: interengaging element
- 166: abutment flange
- 167: notches
- 168: pin assembly
- 169: spring element
- 170: plastic insert of more rigid plastic than the thermoplastic material of the bicycle frame
- 171: metal insert
- 172: internally guided cable in rear portion
- 173: cables
- 174: kickstand
- 175: crank arm
- 176: upper flange of slide insert
- 178: support for two translatory degrees of freedom (y- and z-direction)
- 179: support for three translatory degrees of freedom (x-,y- and z-direction)
- 180: rear wheel
- 181: internally guided cable in middle portion 120
- 182: internally guided cable to back wheel including electric motor
- 183: brake for front wheel
- 184: brake for rear wheel
- 185: indicator left
- 186: indicator right
- 187: actuator front brake
- 188: actuator rear brake
- 189: actuator bike lock
- 190: fork
- 191: steer tube
- 192: blades of fork
- 193: plastic insert
- 194: front wheel
- 195: steering portion formed as handlebar
- 196: rib for limiting steering angle
- 102 l: longitudinal ribs
- 102 t: transverse ribs with relation to the longitudinal axis m of the middle portion
- 103x: X-shaped strips
- 110s: slider for manufacturing head tube
- 120s: slider for manufacturing bottom cavity in middle portion
- 125s: slider for manufacturing battery cavity 125
- 130s: slider for manufacturing seat tube
- 140s: slider for manufacturing cavity in rear portion
- 164u: back element of slide insert 164
- 164U: front element of slide insert 164
- 164p: protrusions of back element 164u to be inserted in 164s
- 164s: slit for connecting back element 164 u and front element 164 Ua central longitudinal axis of head tube
- b: central longitudinal axis of cavity for energy store
- c: longitudinal axis of seat tube
- d: vertical axis through center of rear wheel aperture
- m: longitudinal axis of middle portion
- r: axis parallel to rear wheel axis through the center of rear wheel aperture
- x: horizontal axis through the center of bottom bracket
- x1: horizontal axis through the center of rear wheel aperture
- y: vertical axis through the center of bottom bracket
- α: angle between head tube axis a and axis d
- β: angle between longitudinal axis of the seat tube c and vertical axis y
- δ: angle between longitudinal axis of cavity b and longitudinal axis m
- BRK_F/R: Brake - front/right
- P: pivot axis
- IOT: Internet of things
- HMI: Human machine interface
- Lock: locking system of electric bicycle
- A-A: intersection line
- H1: height between center of bottom bracket and lowest center of head tube
- H2: height between center of bottom bracket and highest center point of the seat tube and of bottom bracket and lower center of head tube
- W1: width between rear wheel hub and head tube
- W2: distance between center of bottom bracket and center of seat tube
- F1: Force directed vertically down from both side of the steering portion
- F2: Force at the first fork end
- F3: Force at the second fork end opposed to the first fork end
- F4: Force of the bicycle basket
- F5: Force of the fork having 2 translatory degrees of freedom (y- /z-direction)
- F6: bottom bracket force transmitted to a pedal in the lowest position
- F7: force trailer
- F8: force back luggage
- F9: saddle force
- F10: kickstand force
- M1: torque brake
- M2: torque support
- M3: counter torque of power generator

## Claims

1. A bicycle frame (100) for an electric bicycle formed by a unitary structure and manufactured by injection moulding of reinforced thermoplastic material;
wherein the unitary structure comprises:
a head tube (110);
a seat tube (130), having a seat post receptable configured to receive a seat post (160);
a middle portion (120) connecting the head tube (110) and the seat tube (130); and
a rear portion (140) configured to engage a rear wheel;
wherein a bottom bracket (121) is formed in the middle portion (120); and;
wherein an elongated cavity (125) is formed in one of the middle portion (120) or the rear portion (140) and is configured to accommodate at least one energy store for motive power and/or electric equipment;
**characterized in that**
the bicycle frame further comprises a quick release locking assembly (145) comprising a cam plate (146) and a pin assembly (168) made of reinforced thermoplastic, the pin assembly (168) having at least one pin (148) configured to engage in a corresponding recess of the seat post (160) for locking the seat post (160) at a predetermined height;
wherein the rear portion (140) comprises a recess (163) for accommodating at least a part of the pin assembly (168) and a lever (147) configured to move the at least one pin (148) of the pin assembly (168) through a corresponding opening of the seat tube (130);
wherein the lever (147), is movable from a release position to a locked position, and is configured to be coupled, via the cam plate (146), to the pin assembly (168), which is pivotable,
wherein the cam plate (146) defines an elongated guide rail or aperture, wherein a picker (149) of the pin assembly (168) is moveably coupled to the cam plate (146) to move within and constrained by the guide rail or aperture from a release position to a locked position of said pin assembly (168).

2. The bicycle frame of claim 1, wherein the cavity (125) is arranged in the middle portion (120) between the bottom bracket (121) and the head tube (110) and the energy store (150) comprises at least a battery (BAT),
wherein the elongated cavity (125) is configured such that an outermost circumference of the battery around a longitudinal center axis of the battery is entirely surrounded by the middle portion (120).

3. The bicycle frame according to claim 1 or 2, wherein a plurality of reinforcing ribs (142) are provided at least on one of the middle portion (120) and the rear portion (140), said rear portion (140) further configured to support a luggage rack.

4. The bicycle frame according to any of the preceding claims, wherein the reinforced thermoplastic material comprises at least one reinforcing component selected from the group consisting of carbon fibres, glass fibres, natural fibres, carbon nano tubes; or a combination thereof,
wherein optionally the frame comprises regions with a higher fibre to thermoplastic material weight ratio in order to support higher mechanical loads.

5. The bicycle frame according to claim 4, wherein the reinforced thermoplastic has a glass-fiber content of 20 to 65 % by weight; preferably of 50 % by weight and
wherein said thermoplastic is selected from PA6, PA6.6 or a mixture thereof and at least in regions of higher mechanical loads.

6. The bicycle frame according to any of the preceding claims, wherein at least one metal insert (111, 112) and/or at least one plastic insert (170) of more rigid plastic than the thermoplastic material of the bicycle frame is connected to the thermoplastic material of the bicycle frame by injection moulding,
wherein the metal insert or plastic insert (170) is preferably arranged in or in the vicinity of one or more of the following components:
the head tube (110); the seat tube (130), the bottom bracket (121), a bearing of the rear wheel, a brake caliper and a luggage rack (114).

7. The bicycle frame of claim 6,
wherein the plastic insert for a support element of the rear wheel axle (180) comprises apertures for an injection moulded and form-fitting connection and is optionally configured to receive braking elements.

8. The bicycle frame according to any of the preceding claims, wherein the rear portion (140) comprises a rear wheel hub support and a luggage rack (114).

9. The bicycle frame of any of the preceding claims, wherein the pin assembly (168) is spring biased by a spring element (169) toward the locked position.

10. The bicycle frame according to any of the preceding claims, wherein the seat tube (130) has at least partially a non-circular inner cross-section such that the rotation of the corresponding seat post (160) around the seat post axis is limited or prevented.

11. The bicycle frame according to any of the preceding claims, wherein a slide insert (164) is configured to guide the axially displaceable seat post in said slide insert (164) positioned at an upper portion of the seat tube between the inner diameter of the seat tube and the outer diameter of the seat post (160).

12. The bicycle frame according to any of the preceding claims, wherein the head tube (110) further comprises at least one bearing bush and is configured to receive the corresponding steer tube (191) of a fork (190) made of metal and/or thermoplastic material.

13. A bicycle frame according to any of the preceding claims, wherein the electric equipment of the electric bicycle comprises at least one of the following:
cables guided at least partially within the bicycle frame;
electric drive unit comprising an electric motor (151), optionally a chainless drive system;
an energy store management system;
a break control system;
a central control unit (115);
at least one processor;
at least one memory, optionally containing one or more applets;
at least one user interface;
a communication interface for diagnostic tool and/or internet; and
a plurality of lights;
an automatic lock;
a plurality of indicators.

14. A seat post manufactured by injection moulding of reinforced thermoplastic
material configured to be received by a seat tube (130) of the bicycle frame (100) according to any of claims 1-13 formed by a unitary structure and manufactured by injection moulding of reinforced thermoplastic material according to any of claims 1-13; said seat post comprising a hollow profile with a plurality of protruding ribs (162) in order to interengage with the at least one pin (148) of the quick release locking assembly (145) arranged at the seat tube (130).

15. A seat post of claim 14, wherein said hollow profile has a U-shaped cross-section that comprises transverse ribs partitioning said hollow profile into a plurality of segments; and
wherein the protruding ribs (162) are configured to interengage with the at least one pin or a plurality of said pins of the locking assembly (145) and the protruding ribs (162) are arranged transversely on the outward facing side of the free ends of the hollow profile.

16. A seat post of claim 15, wherein the seat post further is guidable within a slide insert (164) fixated at an upper portion of the seat tube via at least one interengaging element (165) and the seat post (160) further comprises a flange (166) at the free end of the seat post to prevent a full extraction from the seat post that is configured to abut with the bottom edge of the slide insert (164).

17. A method of manufacturing a bicycle frame (100) according to any of the claims 1 to 13 having a unitary structure; the method comprising the following steps:
injection moulding of reinforced thermoplastic material using a single injection tool to integrally form a unitary structure comprising:
a head tube (110), a seat tube (130), a middle portion (120) and
a rear portion (140);
wherein a bottom bracket (121) is formed in the middle portion (120); and;
providing and extracting a plurality of slider (110s, 120s, 130s, 140 s, 150s) in the injection tool in the head tube (110), in the seat tube (130), in the middle portion (120) and the rear portion (140) to form the head tube (110), the seat tube (130) and an elongated cavity configured to accommodate an energy store (150), which preferably comprises at least a battery (BAT);
wherein the rear portion (140) comprises a recess (163) for accommodating at least a part of a pin assembly (168) and a lever (147) configured to move at least one pin (148) of the pin assembly (168) through a corresponding opening of the seat tube (130).

18. A method according to claim 17, further comprising
connecting one or more inserts of metal or plastic into regions of higher mechanical loads by injection moulding and optionally backmoulding through apertures at least a part of one or more insert for connecting in a force- and/or form-fitting manner.

19. An electric bicycle 1100 having a bicycle frame 100 according to any of the claims 1 to 13, further comprising the rear wheel (180) and a fork (190) connected to a front wheel and a steering portion (195), wherein the fork (190) is a one piece made of reinforced thermoplastic material or the fork (190) comprises metal and thermoplastic material, wherein the fork head (191) is made of metal.

## Patentansprüche

1. Ein Fahrradrahmen (100) für ein Elektrofahrrad, der durch eine einheitliche Struktur gebildet ist und durch Spritzgießen von verstärktem thermoplastischem Material hergestellt ist;
wobei die einheitliche Struktur Folgendes beinhaltet:
ein Lenkrohr (110);
ein Sitzrohr (130), das eine Sitzstangeaufnahme aufweist, die konfiguriert ist, um eine Sitzstange (160) aufzunehmen;
einen Mittelabschnitt (120), der das Lenkrohr (110) und das Sitzrohr (130) verbindet; und
einen hinteren Abschnitt (140), der zum Eingriff mit einem Hinterrad konfiguriert ist;
wobei ein Tretlager (121) in dem Mittelabschnitt (120) gebildet ist; und;
wobei ein länglicher Hohlraum (125) in einem von dem Mittelabschnitt (120) oder dem hinteren Abschnitt (140) gebildet ist und konfiguriert ist, um mindestens einen Energiespeicher für Antriebsleistung und/oder elektrische Ausrüstung zu unterbringen;
**dadurch gekennzeichnet, dass**
der Fahrradrahmen ferner eine Schnelllöseverriegelungsanordnung (145) beinhaltet, die eine Nockenplatte (146) und eine Stiftanordnung (168), die aus verstärktem Thermoplast hergestellt ist, beinhaltet, wobei die Stiftanordnung (168) mindestens einen Stift (148) aufweist, der konfiguriert ist, um in eine entsprechende Aussparung der Sitzstange (160) zum Verriegeln der Sitzstange (160) in einer vorbestimmten Höhe in Eingriff zu nehmen;
wobei der hintere Abschnitt (140) eine Aussparung (163) zum Unterbringen mindestens eines Teils der Stiftanordnung (168) und einen Hebel (147), der konfiguriert ist, um den mindestens einen Stift (148) der Stiftanordnung (168) durch eine entsprechende Öffnung des Sitzrohrs (130) zu bewegen, beinhaltet;
wobei der Hebel (147) aus einer Löseposition in eine verriegelte Position beweglich ist und konfiguriert ist, um über die Nockenplatte (146) mit der Stiftanordnung (168), die schwenkbar ist, gekoppelt zu werden,
wobei die Nockenplatte (146) eine längliche Führungsschiene oder -durchbruch definiert,
wobei ein Greifer (149) der Stiftanordnung (168) beweglich mit der Nockenplatte (146) gekoppelt ist, um sich innerhalb der Führungsschiene oder -durchbruch von einer Löseposition in eine verriegelte Position der Stiftanordnung (168) zu bewegen und durch diese eingeschränkt zu werden.

2. Fahrradrahmen gemäß Anspruch 1, wobei der Hohlraum (125) in dem Mittelabschnitt (120) zwischen dem Tretlager (121) und dem Lenkrohr (110) angeordnet ist und der Energiespeicher (150) mindestens eine Batterie (BAT) beinhaltet,
wobei der längliche Hohlraum (125) so konfiguriert ist, dass ein äußerster Umfang der Batterie um eine Längsmittelachse der Batterie vollständig von dem Mittelabschnitt (120) umgeben ist.

3. Fahrradrahmen gemäß Anspruch 1 oder 2, wobei eine Vielzahl von Verstärkungsrippen (142) mindestens an einem von dem Mittelabschnitt (120) und dem hinteren Abschnitt (140) bereitgestellt sind, wobei der hintere Abschnitt (140) ferner konfiguriert ist, um einen Gepäckträger zu stützen.

4. Fahrradrahmen gemäß einem der vorhergehenden Ansprüche, wobei das verstärkte thermoplastische Material mindestens eine Verstärkungskomponente beinhaltet, die aus der Gruppe ausgewählt ist, die aus Kohlenstofffasern, Glasfasern, Naturfasern, Kohlenstoff-Nanoröhren oder einer Kombination davon besteht,
wobei der Rahmen optional Bereiche mit einem höheren Gewichtsverhältnis von Faser zu thermoplastischem Material beinhaltet, um höhere mechanische Lasten zu tragen.

5. Fahrradrahmen gemäß Anspruch 4, wobei das verstärkte Thermoplast einen Glasfasergehalt von 20 bis 65 Gew.-%, vorzugsweise von 50 Gew.-% aufweist und wobei das Thermoplast aus PA6, PA6.6 oder einer Mischung davon und mindestens in Bereichen mit höheren mechanischen Lasten ausgewählt ist.

6. Fahrradrahmen gemäß einem der vorhergehenden Ansprüche, wobei mindestens ein Metalleinsatz (111, 112) und/oder mindestens ein Kunststoffeinsatz (170) aus steiferem Kunststoff als das thermoplastische Material des Fahrradrahmens mit dem thermoplastischen Material des Fahrradrahmens durch Spritzgießen verbunden ist, wobei der Metalleinsatz oder Kunststoffeinsatz (170) vorzugsweise in oder in der Nähe von einer oder mehreren der folgenden Komponenten angeordnet ist:
dem Lenkrohr (110); dem Sitzrohr (130), dem Tretlager (121), einem Lager des Hinterrads, einem Bremssattel und einem Gepäckträger (114).

7. Fahrradrahmen gemäß Anspruch 6,
wobei der Kunststoffeinsatz für ein Trägerelement der Hinterradachse (180) Durchbrüche für eine spritzgegossene und formschlüssige Verbindung beinhaltet und optional zum Aufnehmen von Bremselementen konfiguriert ist.

8. Fahrradrahmen gemäß einem der vorhergehenden Ansprüche, wobei der hintere Abschnitt (140) eine Hinterradnabenstütze und einen Gepäckträger (114) beinhaltet.

9. Fahrradrahmen gemäß einem der vorhergehenden Ansprüche, wobei die Stiftanordnung (168) durch ein Federelement (169) in Richtung der verriegelten Position federvorgespannt ist.

10. Fahrradrahmen gemäß einem der vorhergehenden Ansprüche, wobei das Sitzrohr (130) mindestens teilweise einen nicht kreisförmigen Innenquerschnitt aufweist, so dass die Drehung der entsprechenden Sitzstange (160) um die Sitzstangenachse begrenzt oder verhindert wird.

11. Fahrradrahmen gemäß einem der vorhergehenden Ansprüche, wobei ein Gleiteinsatz (164) konfiguriert ist, um die axial verschiebbare Sitzstange in dem Gleiteinsatz (164) zu führen, der an einem oberen Abschnitt des Sitzrohrs zwischen dem Innendurchmesser des Sitzrohrs und dem Außendurchmesser der Sitzstange (160) positioniert ist.

12. Fahrradrahmen gemäß einem der vorhergehenden Ansprüche, wobei das Lenkrohr (110) ferner mindestens eine Lagerbuchse beinhaltet und konfiguriert ist, um das entsprechende Gabelschaftrohr (191) einer Gabel (190) aufzunehmen, die aus Metall und/oder thermoplastischem Material hergestellt ist.

13. Fahrradrahmen gemäß einem der vorhergehenden Ansprüche, wobei die elektrische Ausrüstung des Elektrofahrrads mindestens eines der Folgenden beinhaltet:
Kabel, die mindestens teilweise innerhalb des Fahrradrahmens geführt sind;
eine elektrische Antriebseinheit, die einen Elektromotor (151) beinhaltet, optional ein kettenloses Antriebssystem;
ein Energiespeicher-Managementsystem;
ein Bremssteuerungssystem;
eine zentrale Steuereinheit (115);
mindestens einen Prozessor;
mindestens einen Speicher, der optional ein oder mehrere Applets enthält;
mindestens eine Benutzerschnittstelle;
eine Kommunikationsschnittstelle für ein Diagnosewerkzeug und/oder das Internet; und
eine Vielzahl von Leuchten;
eine automatische Verriegelung;
eine Vielzahl von Blinkern.

14. Eine Sitzstange, die durch Spritzgießen von verstärktem thermoplastischem Material hergestellt ist, die zum Aufnehmen durch ein Sitzrohr (130) des Fahrradrahmens (100) gemäß einem der Ansprüche 1-13 konfiguriert ist, der durch eine einheitliche Struktur gebildet ist und durch Spritzgießen von verstärktem thermoplastischem Material nach einem der Ansprüche 1-13 hergestellt ist;
wobei die Sitzstange ein Hohlprofil mit einer Vielzahl von vorstehenden Rippen (162) beinhaltet, um mit dem mindestens einen Stift (148) der Schnelllöseverriegelungsanordnung (145), der an dem Sitzrohr (130) angeordnet ist, ineinanderzugreifen.

15. Sitzstange gemäß Anspruch 14, wobei das Hohlprofil einen U-förmigen Querschnitt aufweist, der Querrippen beinhaltet, die das Hohlprofil in eine Vielzahl von Segmenten unterteilen; und
wobei die vorstehenden Rippen (162) konfiguriert sind, um mit dem mindestens einen Stift oder einer Vielzahl der Stifte der Verriegelungsanordnung (145) ineinanderzugreifen, und die vorstehenden Rippen (162) quer auf der nach außen weisenden Seite der freien Enden des Hohlprofils angeordnet sind.

16. Sitzstange gemäß Anspruch 15, wobei die Sitzstange ferner innerhalb eines Gleiteinsatzes (164) führbar ist, der an einem oberen Abschnitt des Sitzrohrs über mindestens ein ineinandergreifendes Element (165) befestigt ist, und die Sitzstange (160) ferner einen Flansch (166) an dem freien Ende der Sitzstange beinhaltet, um ein vollständiges Herausziehen aus der Sitzstange zu verhindern, der konfiguriert ist, um an der Unterkante des Gleiteinsatzes (164) anzuliegen.

17. Ein Verfahren zum Herstellen eines Fahrradrahmens (100) gemäß einem der Ansprüche 1 bis 13, der eine einheitliche Struktur aufweist; wobei das Verfahren die folgenden Schritte beinhaltet:
Spritzgießen von verstärktem thermoplastischem Material unter Verwendung eines einzelnen Spritzgießwerkzeugs, um integral eine einheitliche Struktur zu bilden, die Folgendes beinhaltet:
ein Lenkrohr (110), ein Sitzrohr (130), einen Mittelabschnitt (120) und
einen hinteren Abschnitt (140);
wobei ein Tretlager (121) in dem Mittelabschnitt (120) gebildet ist; und;
Bereitstellen und Entnehmen einer Vielzahl von Schiebern (110s, 120s, 130s, 140s, 150s) in dem Spritzgießwerkzeug in dem Lenkrohr (110), in dem Sitzrohr (130), in dem Mittelabschnitt (120) und dem hinteren Abschnitt (140), um das Lenkrohr (110), das Sitzrohr (130) und einen länglichen Hohlraum, der konfiguriert ist, um einen Energiespeicher (150), der vorzugsweise mindestens eine Batterie (BAT) beinhaltet, zu unterbringen, zu bilden;
wobei der hintere Abschnitt (140) eine Aussparung (163) zum Unterbringen mindestens eines Teils einer Stiftanordnung (168) und einen Hebel (147), der konfiguriert ist, um mindestens einen Stift (148) der Stiftanordnung (168) durch eine entsprechende Öffnung des Sitzrohrs (130) zu bewegen, beinhaltet.

18. Verfahren gemäß Anspruch 17, das ferner das Verbinden von einem oder mehreren Einsätzen aus Metall oder Kunststoff in Bereichen mit höheren mechanischen Lasten durch Spritzgießen und optional Hinterspritzen durch Durchbrüche von mindestens einem Teil von einem oder mehreren Einsätzen zum Verbinden in einer kraft- und/oder formschlüssigen Weise beinhaltet.

19. Ein Elektrofahrrad (1100) mit einem Fahrradrahmen (100) gemäß einem der Ansprüche 1 bis 13, das ferner das Hinterrad (180) und eine Gabel (190), die mit einem Vorderrad und einem Lenkabschnitt (195) verbunden ist, beinhaltet, wobei die Gabel (190) aus einem Stück ist, das aus verstärktem thermoplastischem Material hergestellt ist, oder die Gabel (190) Metall und thermoplastisches Material beinhaltet, wobei der Gabelkopf (191) aus Metall hergestellt ist.

## Revendications

1. Cadre de bicyclette (100) pour une bicyclette électrique formé par une structure unitaire et fabriqué par moulage par injection d'un matériau thermoplastique renforcé ;
dans lequel la structure unitaire comprend :
un tube de direction (110) ;
un tube de selle (130), ayant un réceptacle pour tige de selle, configuré pour recevoir une tige de selle (160) ;
une portion centrale (120) reliant le tube de direction (110) et le tube de selle (130) ; et
une portion arrière (140) configurée pour venir en prise avec une roue arrière ;
dans lequel un boîtier de pédalier (121) est formé dans la portion centrale (120) ; et ;
dans lequel une cavité allongée (125) est formée dans l'une de la portion centrale (120) ou de la portion arrière (140) et est configurée pour loger au moins un accumulateur d'énergie pour une énergie motrice et/ou un équipement électrique ;
**caractérisé en ce que**
le cadre de bicyclette comprend en outre un ensemble de verrouillage à libération rapide (145) comprenant une plaque à came (146) et un ensemble de goupille (168) constitué d'un thermoplastique renforcé, l'ensemble de goupille (168) ayant au moins une goupille (148) configurée pour venir en prise avec un évidement correspondant de la tige de selle (160) pour verrouiller la tige de selle (160) à une hauteur prédéterminée ;
dans lequel la portion arrière (140) comprend un évidement (163) pour loger au moins une partie de l'ensemble de goupille (168) et un levier (147) configuré pour déplacer l'au moins une goupille (148) de l'ensemble de goupille (168) à travers une ouverture correspondante du tube de selle (130) ;
dans lequel le levier (147) est déplaçable d'une position de libération à une position verrouillée, et est configuré pour être couplé, via la plaque à came (146), à l'ensemble de goupille (168), qui est pivotable,
dans lequel la plaque à came (146) définit un rail de guidage allongé ou une ouverture allongée,
dans lequel un doigt de préhension (149) de l'ensemble de goupille (168) est couplé de manière déplaçable à la plaque à came (146) pour se déplacer à l'intérieur de, et
contraint par, le rail de guidage ou l'ouverture d'une position de libération à une position verrouillée dudit ensemble de goupille (168).

2. Le cadre de bicyclette selon la revendication 1, dans lequel la cavité (125) est agencée dans la portion centrale (120) entre le boîtier de pédalier (121) et le tube de direction (110) et l'accumulateur d'énergie (150) comprend au moins une batterie (BAT),
dans lequel la cavité allongée (125) est configurée de telle sorte qu'une circonférence la plus extérieure de la batterie autour d'un axe central longitudinal de la batterie est entièrement entourée par la portion centrale (120).

3. Le cadre de bicyclette selon la revendication 1 ou 2, dans lequel une pluralité de nervures de renforcement (142) sont prévues au moins sur l'une de la portion centrale (120) et de la portion arrière (140), ladite portion arrière (140) étant en outre configurée pour supporter un porte-bagages.

4. Le cadre de bicyclette selon l'une quelconque des revendications précédentes, dans lequel le matériau thermoplastique renforcé comprend au moins un composant de renforcement sélectionné dans le groupe constitué de fibres de carbone, de fibres de verre, de fibres naturelles, de nanotubes de carbone ; ou d'une combinaison de ceux-ci, dans lequel facultativement le cadre comprend des régions avec un rapport en poids de fibre sur matériau thermoplastique plus élevé afin de supporter des charges mécaniques plus élevées.

5. Le cadre de bicyclette selon la revendication 4, dans lequel le thermoplastique renforcé a une teneur en fibres de verre de 20 à 65 % en poids ; de préférence de 50 % en poids et
dans lequel ledit thermoplastique est sélectionné parmi PA6, PA6.6 ou un mélange de ceux-ci et au moins dans des régions de charges mécaniques plus élevées.

6. Le cadre de bicyclette selon l'une quelconque des revendications précédentes, dans lequel au moins un insert métallique (111, 112) et/ou au moins un insert en plastique (170) réalisé en un plastique plus rigide que le matériau thermoplastique du cadre de bicyclette est relié au matériau thermoplastique du cadre de bicyclette par moulage par injection,
dans lequel l'insert métallique ou l'insert en plastique (170) est de préférence agencé dans ou à proximité d'un ou de plusieurs des composants suivants :
le tube de direction (110) ; le tube de selle (130), le boîtier de pédalier (121), un palier de la roue arrière, un étrier de frein et un porte-bagages (114).

7. Le cadre de bicyclette selon la revendication 6,
dans lequel l'insert en plastique pour un élément de support de l'essieu de roue arrière (180) comprend des ouvertures pour une liaison obtenue par moulage par injection et par complémentarité de forme et est facultativement configuré pour recevoir des éléments de freinage.

8. Le cadre de bicyclette selon l'une quelconque des revendications précédentes, dans lequel la portion arrière (140) comprend un support de moyeu de roue arrière et un porte-bagages (114).

9. Le cadre de bicyclette selon l'une quelconque des revendications précédentes, dans lequel l'ensemble de goupille (168) est sollicité par ressort par un élément de ressort (169) vers la position verrouillée.

10. Le cadre de bicyclette selon l'une quelconque des revendications précédentes, dans lequel le tube de selle (130) a au moins partiellement une section transversale intérieure non circulaire de telle sorte que la rotation de la tige de selle correspondante (160) autour de l'axe de la tige de selle est limitée ou empêchée.

11. Le cadre de bicyclette selon l'une quelconque des revendications précédentes, dans lequel un insert de guidage (164) est configuré pour guider la tige de selle déplaçable axialement dans ledit insert de guidage (164) positionné au niveau d'une portion supérieure du tube de selle entre le diamètre intérieur du tube de selle et le diamètre extérieur de la tige de selle (160).

12. Le cadre de bicyclette selon l'une quelconque des revendications précédentes, dans lequel le tube de direction (110) comprend en outre au moins une douille de palier et est configuré pour recevoir le tube pivot de fourche correspondant (191) d'une fourche (190) faite de métal et/ou de matériau thermoplastique.

13. Un cadre de bicyclette selon l'une quelconque des revendications précédentes, dans lequel l'équipement électrique de la bicyclette électrique comprend au moins un des éléments suivants :
des câbles guidés au moins partiellement à l'intérieur du cadre de bicyclette ;
une unité d'entraînement électrique comprenant un moteur électrique (151),
facultativement un système d'entraînement sans chaîne ;
un système de gestion de l'accumulateur d'énergie ;
un système de commande de frein ;
une unité de commande centrale (115) ;
au moins un processeur ;
au moins une mémoire, contenant facultativement un ou plusieurs applets ;
au moins une interface utilisateur ;
une interface de communication pour un outil de diagnostic et/ou Internet ; et
une pluralité de dispositifs d'éclairage ;
un verrouillage automatique ;
une pluralité d'indicateurs.

14. Une tige de selle fabriquée par moulage par injection d'un matériau thermoplastique renforcé configurée pour être reçu par un tube de selle (130) du cadre de bicyclette (100) selon l'une quelconque des revendications 1 à 13 formé par une structure unitaire et fabriquée par moulage par injection d'un matériau thermoplastique renforcé selon l'une quelconque des revendications 1 à 13 ;
ladite tige de selle comprenant un profil creux avec une pluralité de nervures saillantes (162) afin de venir en prise avec l'au moins une goupille (148) de l'ensemble de verrouillage à libération rapide (145) agencé au niveau du tube de selle (130).

15. Une tige de selle selon la revendication 14, dans lequel ledit profil creux a une section transversale en forme de U qui comprend des nervures transversales divisant ledit profil creux en une pluralité de segments ; et
dans laquelle les nervures saillantes (162) sont configurées pour venir en prise avec l'au moins une goupille ou une pluralité desdites goupilles de l'ensemble de verrouillage (145) et les nervures saillantes (162) sont agencées transversalement sur le côté tourné vers l'extérieur des extrémités libres du profil creux.

16. Une tige de selle selon la revendication 15, dans laquelle la tige de selle peut en outre être guidée à l'intérieur d'un insert de guidage (164) fixé au niveau d'une portion supérieure du tube de selle via au moins un élément de mise en prise (165) et la tige de selle (160) comprend en outre une bride (166) au niveau de l'extrémité libre de la tige de selle pour empêcher une extraction complète de la tige de selle, qui est configurée pour venir en butée contre le bord inférieur de l'insert de guidage (164).

17. Un procédé de fabrication d'un cadre de bicyclette (100) selon l'une quelconque des revendications 1 à 13 ayant une structure unitaire ; le procédé comprenant les étapes suivantes :
moulage par injection d'un matériau thermoplastique renforcé en utilisant un seul outil d'injection pour former intégralement une structure unitaire comprenant :
un tube de direction (110), un tube de selle (130), une portion centrale (120) et une portion arrière (140) ;
dans lequel un boîtier de pédalier (121) est formé dans la portion centrale (120) ; et ;
fourniture et extraction d'une pluralité de coulisseaux (110s, 120s, 130s, 140s, 150s) dans l'outil d'injection dans le tube de direction (110), dans le tube de selle (130), dans la portion centrale (120) et la portion arrière (140) pour former le tube de direction (110), le tube de selle (130) et une cavité allongée configurée pour loger un accumulateur d'énergie (150), qui comprend de préférence au moins une batterie (BAT) ;
dans lequel la portion arrière (140) comprend un évidement (163) pour loger au moins une partie d'un ensemble de goupille (168) et un levier (147) configuré pour déplacer au moins une goupille (148) de l'ensemble de goupille (168) à travers une ouverture correspondante du tube de selle (130).

18. Un procédé selon la revendication 17, comprenant en outre le raccordement d'un ou de plusieurs inserts en métal ou en plastique dans des régions de charges mécaniques plus élevées par moulage par injection et, facultativement, un surmoulage à travers des ouvertures d'au moins une partie d'un ou de plusieurs inserts pour un raccordement par force et/ou par complémentarité de forme.

19. Une bicyclette électrique (1100) ayant un cadre de bicyclette (100) selon l'une quelconque des revendications 1 à 13, comprenant en outre la roue arrière (180) et une fourche (190) reliée à une roue avant et une portion de direction (195), dans laquelle la fourche (190) est une pièce unique faite d'un matériau thermoplastique renforcé ou la fourche (190) comprend du métal et un matériau thermoplastique, dans laquelle la tête de fourche (191) est faite de métal.
